(19) Europäisches Patentamt
European Patent Office
Office européen des brevets

(11) Veröffentlichungsnummer: **0 360 182 B1**

(12) **EUROPÄISCHE PATENTSCHRIFT**

(45) Veröffentlichungstag der Patentschrift: **19.01.94**

(51) Int. Cl.$^5$: **C09B 67/22**, C09B 57/12, C08K 5/34, C09D 7/00

(21) Anmeldenummer: **89117189.4**

(22) Anmeldetag: **16.09.89**

(54) **Pigmentzubereitungen.**

(30) Priorität: **21.09.88 DE 3832065**
**25.02.89 DE 3905931**

(43) Veröffentlichungstag der Anmeldung:
**28.03.90 Patentblatt 90/13**

(45) Bekanntmachung des Hinweises auf die Patenterteilung:
**19.01.94 Patentblatt 94/03**

(84) Benannte Vertragsstaaten:
**CH DE ES FR GB IT LI**

(56) Entgegenhaltungen:
**DE-B- 1 268 581**
**DE-B- 1 281 609**
**FR-A- 2 281 409**
**GB-A- 2 071 683**
**US-A- 4 762 569**

**PATENT ABSTRACTS OF JAPAN, Band 12, Nr. 50 (C-476)[2897], 16. Februar 1988; & JP-A-62 197 461 (SANYO SHIKISO K.K.) 01-09-1987**

(73) Patentinhaber: **HOECHST AKTIENGESELLSCHAFT**

**D-65926 Frankfurt(DE)**

(72) Erfinder: **Dietz, Erwin, Dr.**
**St.-Matthäus-Strasse 7**
**D-6233 Kelkheim(Taunus)(DE)**
Erfinder: **Schiessler, Siegfried, Dr.**
**Rother Weingartenweg 48**
**D-6232 Bad Soden am Taunus(DE)**
Erfinder: **Urban, Manfred**
**Steigerwaldstrasse 2a**
**D-6200 Wiesbaden(DE)**

**EP 0 360 182 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Pigmentzubereitungen aus organischen Pigmenten und basischen Zusätzen bestimmter allgemeiner Struktur, die im Vergleich zu den Ausgangspigmenten hinsichtlich Dispergierverhalten, Flockungsstabilität, Rheologie, Glanzverhalten und Farbstärke wesentlich verbessert sind, sowie die Verwendung dieser Pigmentzubereitungen zum Pigmentieren von hochmolekularen Materialien und von Lacksystemen.

Es ist allgemein bekannt, daß bei der Pigmentierung von Lacken durch Flockulation erhebliche Probleme verursacht werden können, die sich bei der Anwendung vor allem durch verringerte Farbstärke, ungünstiges rheologisches Verhalten, schlechten Glanz und Oberflächenstörungen der Lackschicht äußern.

Es ist bekannt, daß Pigmente durch Zusätze, die basische Gruppen enthalten, im Flockungsverhalten in bestimmten Fällen günstig beeinflußt werden können.

Bei diesen Zusätzen handelt es sich in erster Linie um basisch substituierte Derivate von Pigmenten. So werden in DE-PS 12 60 433 und 23 16 388 sowie in DE-OS 25 00 509, 31 06 906 und 35 14 077 basische Pigmentderivate der allgemeinen Formel

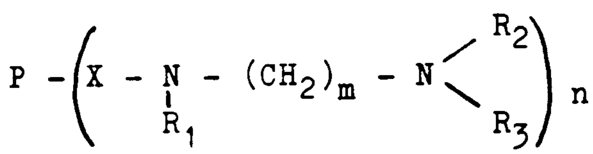

als gegen die Flockulation wirksame Zusätze beschrieben, wobei P einen Pigmentrest, X ein Brückenglied und $R_1$, $R_2$ und $R_3$ Wasserstoff oder Alkylgruppen bedeuten. Die Herstellung derartiger Pigmentderivate ist sehr aufwendig und in der Regel mit einer hohen ökologischen Belastung verbunden, da die Einführung der basischen Substituenten die Anwendung großer Mengen von Schwefelsäure oder Chlorsulfonsäure bedingt.

Bei einer zweiten Gruppe von basischen Pigmentzusätzen handelt es sich um Polymere oder Polyadditionsprodukte, in die basische Gruppen eingebaut sind, wie die in EP 154 678 beschriebenen Polyadditionsverbindungen auf Polyisocyanatbasis, bei denen freie Isocyanatgruppen mit Aminen und Alkoholen umgesetzt wurden. Die Anwendung derartiger basischer Zusätze ist äußerst beschränkt, da bei den meisten Pigmenten das Flockulationsverhalten nur in geringem Maße oder gar nicht verbessert wird.

Eine dritte Gruppe basischer Pigmentzusätze stellen die in DE-OS 30 31 301 beschriebenen, bevorzugt farblosen organischen Verbindungen der allgemeinen Formel

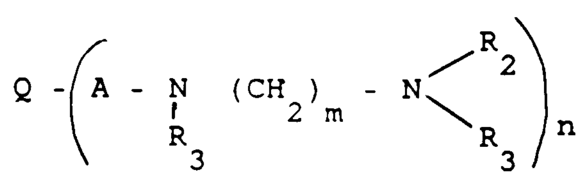

dar, bei denen Q eine aromatische polycyclischer Verbindung und A ein Brückenglied darstellt. Bei der Herstellung von Verbindungen dieses Typs treten wie bei der Herstellung basisch substituierter Pigmente erhebliche ökologische Probleme auf. Außerdem haben basische Zusätze dieses Typs bei der Mehrzahl der Pigmente nur eine geringe oder gar keine Wirkung auf deren Flockulationsverhalten.

Eine vierte Gruppe von basischen Pigmentzusätzen stellen die in JP 62-197461 beschriebenen Umsetzungprodukte von Perylen-3,4,9,10-tetracarbonsäuredianhydrid mit Dialkylaminoalkylaminen dar. Verbindungen dieser Art haben aber in der Regel keine oder nur eine geringe Wirkung auf das Flockulationsverhalten von Pigmenten.

Es war somit die Aufgabe gestellt, basische Pigmentzusätze (Dispergatoren) zur Verhinderung der Flockulation von Pigmenten zu entwickeln, die auf dem Gebiet der polycyclischen Pigmente möglichst universell anwendbar sind und die darüberhinaus auch auf dem Gebiet der Azopigmente einsetzbar sind. Diese Zusätze müssen wirksame basische Gruppen besitzen, eine geringe, die Überlackierechtheit noch nicht beeinflussende Löslichkeit in Lacksystemen aufweisen und eine möglichst große Wechselwirkung mit den Pigmentteilchen ausüben.

Es wurde nun gefunden, daß Pigmentzubereitungen von vorzüglicher Flockungsstabilität erhalten werden, indem man Pigmente mit basischen Zusätzen der allgemeinen Formel I

$(Q - A)_xY$ (I)

vermischt, wobei in der genannten allgemeinen Formel I Q einen Rest der allgemeinen Formel II bedeutet,

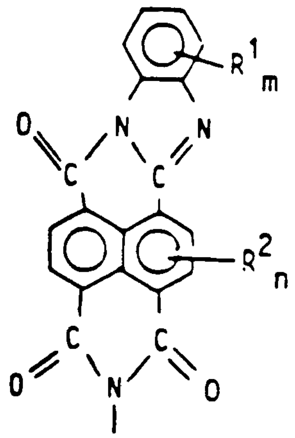

II

in welcher $R^1$ ein Halogenatom, beispielsweise ein Fluor-, Chlor- oder Bromatom, eine Alkyl($C_1$-$C_4$)-, Alkoxy($C_1$-$C_4$)-oder Cyanogruppe bedeutet, wobei im Fall m>1 $R^1$ die genannten Bedeutungen in Kombination haben kann, $R^2$ ein Halogenatom, beispielsweise ein Chlor- oder Bromatom, darstellt, m und n ganze Zahlen von 0 bis 4 beteuten, A eine chemische Bindung oder eine bivalente Gruppe aus der Reihe $-(CH_2)_p-$, $-CR^3R^4-$, Arylen, beispielsweise Phenylen, -S-, -O-und $-NR^5-$ oder eine chemisch sinnvolle Kombination dieser bivalenten Gruppen darstellt, wobei p eine ganze Zahl von 1 bis 12, $R^3$ ein Wasserstoffatom oder eine Alkyl($C_1$-$C_6$)-Gruppe, $R^4$ eine Alkyl($C_1$-$C_6$)-Gruppe und $R^5$ ein Wasserstoffatom oder eine Alkyl($C_1$-$C_6$)-Gruppe bedeuten, Y ein tertiäres Stickstoffatom oder eine Gruppe

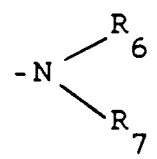

oder >N-$R_8$, in welchen $R_6$, $R_7$ und $R_8$ Alkyl($C_1$-$C_{20}$)- oder Alkenyl($C_1$-$C_{20}$)-Gruppen bedeuten, deren Kohlenstoffketten durch Heteroatome unterbrochen sein können und/oder eine endständige Hydroxyl- oder primäre Aminogruppe oder Acylaminogruppe tragen können, oder einen cycloaliphatischen ($C_5$-$C_6$) oder araliphatischen Rest oder einen Rest -alkylen-Heteroaryl bedeuten können, oder Y einen gesättigten oder ungesättigten heterocyclischen Rest darstellt, wobei mindestens ein tertiäres Stickstoffatom in den genannten Bedeutungen für Y enthalten ist, und x eine ganze Zahl von 1 bis 6 bedeutet.

Für die vorstehend genannte Gruppe

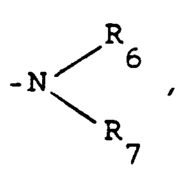

in welcher $R_6$ und $R_7$ u.a. eine cycloaliphatischen ($C_5$-$C_6$) oder araliphatischen Rest oder einen Rest -alkylen-Heteroaryl bedeuten können, seien beispielsweise genannt die N-Cyclohexyl,N-methylaminogruppe, die N-Methyl,N-(2-phenyl)-ethylaminogruppe und die N-Methyl,N-[2-(3'-pyridyl)]-ethylaminogruppe.

Bevorzugt werden Pigmente mit basischen Zusätzen der genannten allgemeinen Formel I vermischt, in welcher im Rest Q m 0 oder 1 und n 0 ist, A die bivalente Gruppe $-(CH_2)_{(2-4)}-$, Y eine Dialkyl($C_{1-6}$)-

aminogruppe, deren Alkylgruppen endständige Hydroxyl- oder primäre Aminogruppen oder Acylaminogruppen tragen können, oder Y einen gesättigten oder ungesättigten heterocyclischen Rest darstellt, wobei mindestens ein tertiäres Stickstoffatom in den genannten Bedeutungen für Y enthalten ist, und x eine ganze Zahl von 1 bis 3 bedeutet.

Besonders bevorzugt werden Pigmente mit basischen Zusätzen der genannten allgemeinen Formel I vermischt, in welcher im Rest Q m und n Null sind, A die bivalente Gruppe $-(CH_2)_{2-3}-$,Y die Dimethylamino- oder Diethylaminogruppe oder einen Imidazol- oder Piperazinrest und x die Zahl 1 oder 2 bedeuten.

Gegenstand der vorliegenden Erfindung sind somit neue Pigmentzubereitungen aus organischen Pigmenten und basischen Zusätzen der vorstehend genannten allgemeinen Formel I sowie deren Verwendung zum Pigmentieren von hochmolekularen organischen Materialien, beispielsweise in Form von plastischen Massen, Schmelzen, Spinnlösungen, Lacken, Anstrichstoffen oder Druckfarben.

Die bei der Herstellung der Pigmentzubereitungen den Pigmenten zugesetzten Mengen an basischen Pigmentzusätzen der genannten allgemeinen Formel (I) sind, soweit die angestrebte Pigmentqualität nicht beeinflußt wird, nicht beschränkt, doch werden bevorzugt Zusatzmengen von 0,1 - 15 Gew.-%, insbesondere von 1 bis 8 Gew.-%, verwendet.

Die neuen Pigmentzubereitungen können als Pigmentkomponente sowohl ein Azopigment als auch ein polycyclisches Pigment enthalten (siehe hierzu weiter unten).

Die Herstellung der basischen Pigmentzusätze der genannten allgemeinen Formel I erfolgt bevorzugt ausgehend von der 1,8-Naphthoylenbenzimidazol-4,5-dicarbonsäure der allgemeinen Formel III

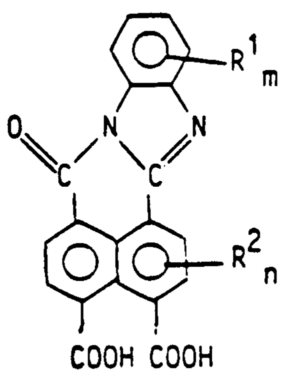

III

oder deren Anhydrid durch Umsetzung mit Verbindungen, die eine oder mehrere primäre Aminogruppen und mindestens eine tertiäre Aminogruppe von ausreichender Basizität aufweisen. Die Umsetzung erfolgt bei erhöhter Temperatur in Eisessig, wäßriger Essigsäure, säurekatalysiert in wäßrigem Medium oder in inertem organischem Medium. Bei Einsatz von Verbindungen, die nur eine primäre Aminogruppe enthalten, kann die Kondensation der basischen Pigmentzusätze ausgehend von der gegebenenfalls substituierten Naphthalin-1,4,5,8-tetracarbonsäure auch nach dem in der DE-OS 22 46 110 beschriebenen Verfahren erfolgen, indem zunächst die Umsetzung mit diesem Amin erfolgt und anschließend ohne Zwischenisolierung mit dem (substituierten) 1,2-Diaminobenzol umgesetzt wird.

Als für die Umsetzung geeignete Amine kommen beispielsweise Amine der folgenden Verbindungsklassen in Betracht:

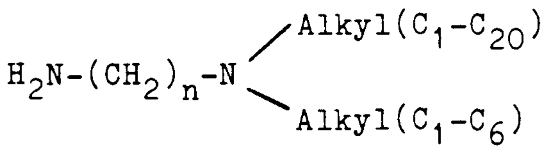

n = 1 - 12

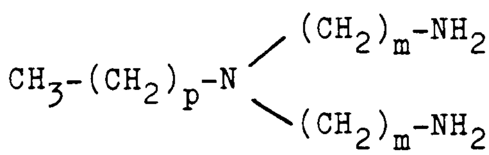

p = 0 - 24

m = 1 - 6

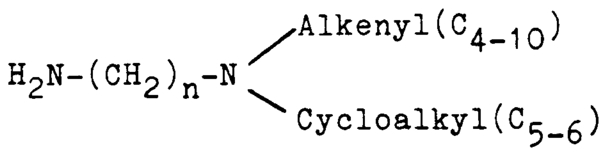

n = 1 - 12

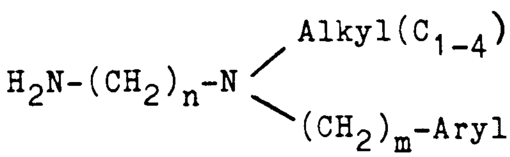

m = 1 - 6

n = 1 - 12

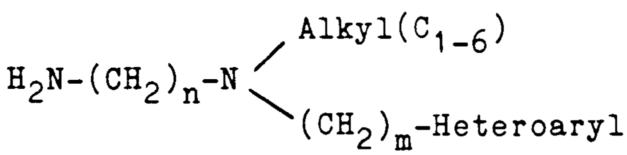

m = 1 - 6

n = 1 - 12

$N\left((CH_2)_m-NH_2\right)_3$

m = 2 - 4

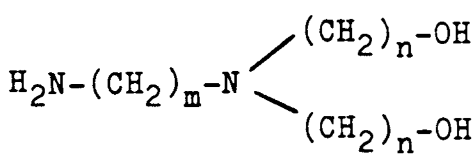

m = 1 - 12

n = 2 - 4

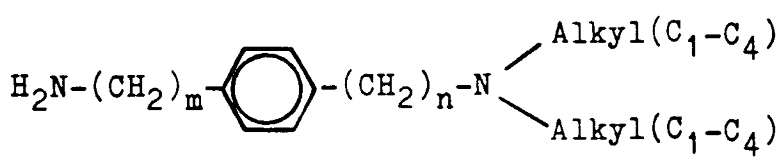

m = 0 - 6

n = 1 - 6

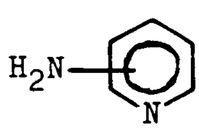

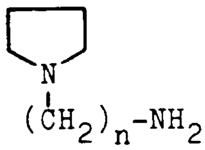

n = 2 - 6

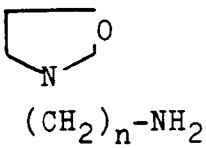

n = 2 - 6

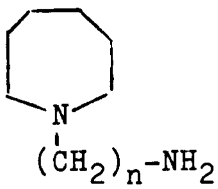

n = 2 - 4

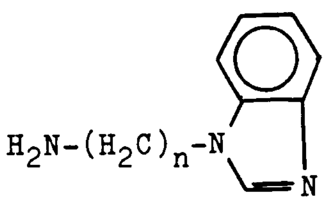

n = 2 - 6

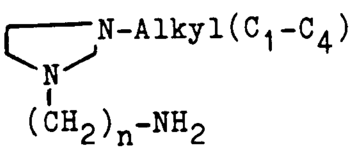

n = 2 - 6

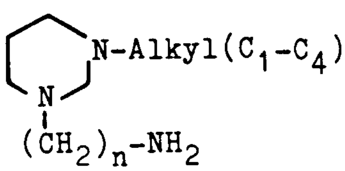

n = 2 - 6

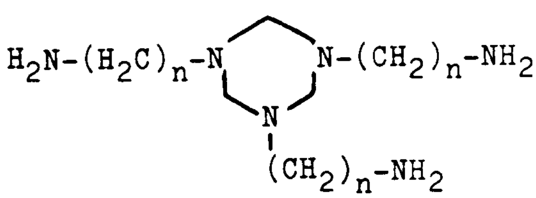

n = 2 - 4

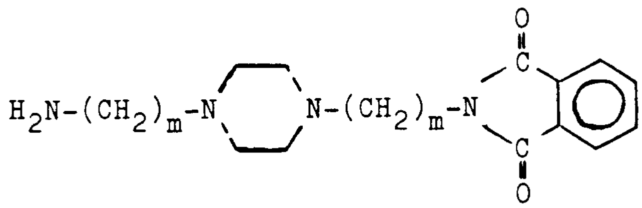

m = 2 - 4

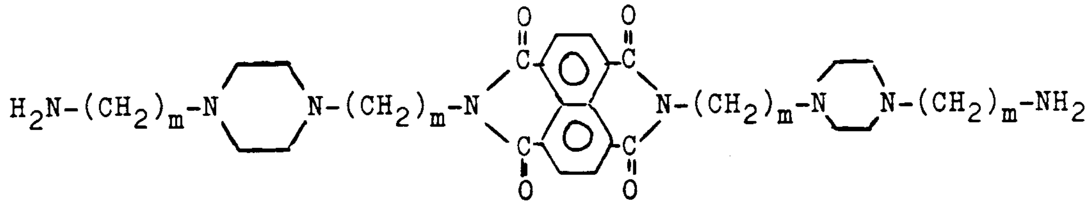

m = 2 - 4

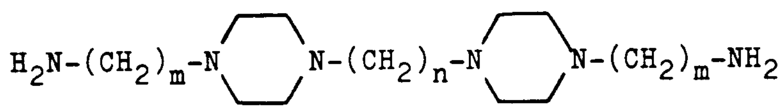

m = 2 - 4
n = 2 - 4

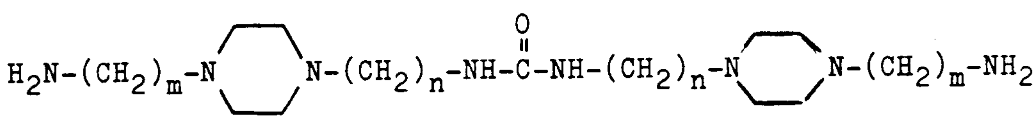

m = 2 - 4
n = 2 - 3

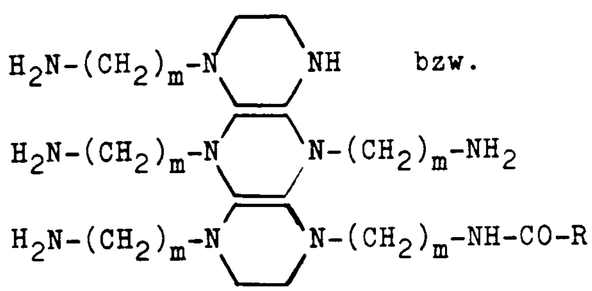

bzw.

m = 2 - 4

m = 2 - 4
R = H oder Alkyl($C_1$-$C_6$)

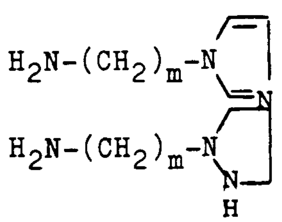

m = 2 - 6

m = 2 - 6

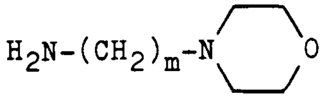

m = 2 - 6

Soweit Verbindungen, die mehrere primäre Aminogruppen enthalten, umgesetzt werden, erfolgt die Umsetzung bevorzugt in verdünnter wässeriger Essigsäure, doch kann die Kondensation in diesem Fall auch in höher siedenden, inerten organischen Lösungsmitteln, wie z.B. Chinolin, erfolgen. Es kann bei dieser Umsetzung für jede primäre Aminogruppe ein Äquivalent der gegebenenfalls substituierten 1,8-Napthoylbenzimidazol-4,5-dicarbonsäure der genannten allgemeinen Formel III eingesetzt werden. Die

Umsetzung kann aber auch so erfolgen, daß das Reaktionsprodukt noch freie Aminogruppen enthält. In beiden Fällen erhält man Pigmentzusätze von hoher Wirksamkeit. Die freien primären Aminogruppen können im Rahmen der Umsetzung oder nachträglich teilweise oder vollständig acyliert werden. Auch diese Pigmentzusätze sind von hoher Wirksamkeit.

Besonders bevorzugte basische Pigmentzusätze stellen beispielsweise die Umsetzungprodukte der 1,8-Naphthoylenbenzimidazol-4,5-dicarbonsäure der Formel IV

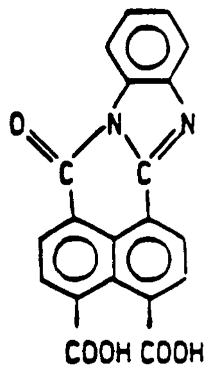

IV

oder deren Anhydrid mit folgenden ein- oder zweiwertigen primären Aminen dar:
2-Dimethylaminoethylamin, 2-Diethylaminoethylamin, 3-Dimethylaminopropylamin, 3-Diethylaminopropylamin, 3-(N-ethyl,N-methyl)-aminopropylamin, 3-(N-n-Butyl,N-methyl)-aminopropylamin, 3-(N-Cyclohexyl,N-methyl)-aminopropylamin, 3-[N-Methyl,N-(2′-phenyl)ethyl]-aminopropylamin, N-Methyl-N-[2-(3-pyridyl)ethyl]-1,3-propylendiamin, N-(3-Aminopropyl)imidazol, N-(2-Aminoethyl)imidazol, 1-(2-Aminoethyl)piperazin, 1-(3-Aminopropyl)piperazin, 1,4-Bis-(2-aminoethyl)piperazin und 1,4-Bis(3-aminopropyl)piperazin.

Von diesen können die beiden letztgenannten zweiwertigen Amine mit der Verbindung IV sowohl im Molverhältnis 1:1 als auch im Molverhältnis 1:2 oder in einem dazwischenliegenden Molverhältnis, vorzugsweise 1:1,5-1,9 , umgesetzt werden. Die bei einem Molverhältnis von 1:1,5-2 erhaltenen basischen Pigmentzusätze zeichnen sich bei hoher Antiflockungswirkung durch besondere Schwerlöslichkeit in organischen Lösungsmitteln und Lacksystemen aus. Anstelle der beiden letztgenannten zweiwertigen Amine können für die Umsetzung im Molverhältnis 1:1 auch deren Monoacylderivate, insbesondere deren Monoacetylderivate, eingesetzt werden. Erfolgt die Umsetzung der zweiwertigen Amine mit der Verbindung IV im Molverhältnis 1:1 in siedendem Eisessig, dann fällt der basische Pigmentzusatz ganz überwiegend in Form der Monoacetylverbindung an.

Die nach den beschriebenen Verfahren erhaltenen basischen Zusätze sind von hoher Wirksamkeit und allgemeiner Einsetzbarkeit. Sie ergeben Pigmentzubereitungen von hoher Flockungsstabilität sowohl mit Azopigmenten als auch mit polycyclischen Pigmenten, wie beispielsweise Anthrachinon-, Anthrapyrimidin-, Anthanthron-, Chinacridon-, Chinophthalon-, Diketopyrrolopyrrol-, Dioxazin-, Flavanthron-, Indanthron-, Isoindolin-, Isoindolinon-, Isoviolanthron-, Perinon-, Perylen-, Phthalocyanin-, Pyranthron- oder Thioindigopigmenten. Diese Pigmente können sowohl als Reinpigmente als auch in Form von physikalischen Mischungen oder als Mischkristalle aus zwei oder mehreren Pigmenten vorliegen:
Besonders wertvolle Pigmentzubereitungen werden erhalten, wenn man die neuen basischen Zusätze mit Perinon- oder Anthanthronpigmenten, wie beispielsweise dem in Fiat Final Report 1313-II beschriebenen cis- und/oder trans-Naphthoylenbisbenzimidazol oder dem 4,10-Dibromanthanthron vermischt.

Die Wirksamkeit der Pigmentzusätze und die Qualität der Pigmentzubereitungen sind in einer Reihe von Fällen abhängig von der Applizierungsmethode der Pigmentzusätze.

Bei der Herstellung der Pigmentzubereitungen können sowohl Mischungen von Pigmenten mit jeweils einem basischen Zusatz hergestellt werden, als auch Mischungen von Pigmenten mit gleichzeitig mehreren basischen Pigmentzusätzen. Die Herstellung der Pigmentzubereitungen kann auf verschiedene Weise erfolgen. So können beispielsweise die basischen Pigmentzusätze dem wasserfeuchten Pigmentpreßkuchen vor der Trocknung zugesetzt und eingearbeitet werden. Man kann auch Trockenmischungen von gemahlenen basischen Pigmentzusätzen mit dem Pigmentpulver herstellen. In vielen Fällen werden dabei aber keine optimalen Ergebnisse erzielt. Es hat sich bewährt, die basischen Pigmentzusätze schon im Stadium der Pigmentherstellung, im Rahmen eines Feinverteilungsprozesses oder eines anschließenden Lösemittelfinishverfahrens zuzusetzen. So kann man beispielsweise Pigment und basische Pigmentzusätze einem gemeinsamen Umküpungsfinish unterwerfen. Die Zugabe der basischen Pigmentzusätze kann auch im Rahmen einer Trockenmahlung eines Pigmentes mit oder ohne zusätzliche Mahlhilfsmittel auf einer Roll-

und Schwingmühle oder im Rahmen einer Naßmahlung eines Pigmentes in wäßrigem, wäßrig-organischem oder organischem Mahlmedium, beispielsweise auf einer Perlmühle, erfolgen. Bewährt hat sich auch die Zugabe der Pigmentzusätze vor oder während eines Druckfinishs in wäßrigem, wäßrig-organischem oder organischem Medium.

Die Isolierung der Pigmentzubereitungen aus einem wäßrigen, wäßrig-organischen oder organischen Medium erfolgt bevorzugt in einem neutralen oder alkalischen pH-Bereich. Die Isolierung aus einem stark sauren Medium ist wegen der Löslichkeit der basischen Pigmentzusätze nicht zweckmäßig. Die basischen Pigmentzusätze können bei der Herstellung der Pigmentzubereitungen auch in Form ihrer Salze, beispielsweise der Formiate, Acetate, Chloride oder Phosphate, eingesetzt werden, sofern dafür gesorgt wird, daß die Zubereitung aus neutralem oder alkalischem Milieu isoliert wird.

Die beanspruchten Pigmentzubereitungen können neben Pigment und basischen Pigmentzusätzen noch weitere Bestandteile enthalten, wie beispielsweise Tenside, Harze oder Antistaubmittel.

Die erfindungsgemäßen Pigmente eignen sich besonders zum Pigmentieren von hochmolekularen organischen Materialien. Hochmolekulare organische Materialien, die mit den beanspruchten Pigmentzubereitungen pigmentiert werden können, sind beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie beispielsweise Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Es spielt dabei keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Pigmentzubereitungen als Toner oder in Form von Präparationen oder Dispersionen einzusetzen. Bezogen auf das zu pigmentierende hochmolekulare organische Material setzt man die beanspruchten Pigmentzubereitungen in einer Menge von vorzugsweise 0,1 bis 10 Gew.-% ein.

Besonders bevorzugte Lacksysteme sind Einbrennlacke aus der Klasse der Alkydmelaminharz- oder Acrylmelaminharzlacke sowie Zweikomponentenlacke auf Basis polyisocyanatvernetzbarer Acrylharze. Von der Vielzahl der Druckfarben sind Druckfarben auf Basis Nitrocellulose besonders zu erwähnen.

Die erfindungsgemäßen Pigmentzubereitungen sind in vielen Anwendungsmedien leicht und bis zu hohen Feinheiten dispergierbar.

Diese Dispersionen besitzen eine hohe Flockungsstabilität und zeigen hervorragende rheologische Eigenschaften selbst bei hoher Pigmentierung. Mit ihnen lassen sich Lackierungen und Drucke von hoher Farbstärke, hohem Glanz und hoher Transparenz mit hervorragenden Echtheitseigenschaften herstellen.

Zur Beurteilung der Eigenschaften der beanspruchten Pigmentzubereitungen in Lacksystemen wurden aus der Vielzahl der bekannten Systeme ein Alkyd-Melaminharz-Lack (AM) auf Basis eines mittelöligen, nichttrocknenden Alkydharzes aus synthetischen Fettsäuren und Phthalsäureanhydrid und eines butanolveretherten Melaminharzes und Anteilen eines nichttrocknenden Alkydharzes auf Basis von Ricinensäure (kurzölig) sowie ein Acrylharzeinbrennlack auf Basis einer nichtwäßrigen Dispersion (TSA-NAD) ausgewählt. In den nachfolgenden Beispielen wird darauf unter der Bezeichnung "AM" bzw. "TSA-NAD" verwiesen.

Die Rheologie des Mahlguts nach der Dispergierung (Millbase-Rheologie) wird anhand der folgenden fünfstufigen Skala beurteilt:

5 dünnflüssig
4 flüssig
3 dickflüssig
2 leicht gestockt
1 gestockt

Nach dem Verdünnen des Mahlguts auf die Pigmentendkonzentration wurde die Viskosität mit dem Viskospatel nach Rossmann, Typ 301, der Firma ERICHSEN beurteilt.

Glanzmessungen erfolgten unter einem Winkel von 20° nach DIN 67530 (ASTMD 523) mit dem "multigloss"-Glanzmeßgerät der Firma BYK-MALLINCKRODT.

In den nachstehenden Beispielen bedeuten Teile Gewichtsteile und Prozente Gewichtsprozente. Der in den Beispielen häufig auftretende unsubstituierte Rest Q der Formel V

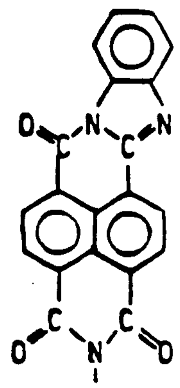

V (Q')

wird abgekürzt mit Q' angegeben.

**Beispiel 1**

a) 25 Teile trans-Naphthoylen-bis-benzimidazol (Pigment Orange 43; C.I. 71105) werden in eine Lösung von 75 Teilen Kaliumhydroxid in 440 Teilen 80 %igem Ethanol (Wassergehalt: 20 %) eingetragen. Darauf wird unter gutem Rühren 2 Stunden gekocht. Nach Abkühlung auf 20 bis 30 °C wird die grobkristalline Fällung scharf abgesaugt. Man erhält 55 Teile eines nahezu farblosen Filterkuchens, in dem das trans-Naphthoylen-bis-benzimidazol in Form des Kaliumhydroxid-Additionsproduktes (nachfolgend Trennsalz genannt) vorliegt.

b) Die 55 Teile Trennsalz werden im Verlauf von 15 Minuten bei 65 bis 70 °C in 600 Teile Wasser unter gutem Rühren eingetragen. Es wird 1 Stunde bei 65 bis 70 °C nachgerührt. Dann setzt man der orangefarbenen Suspension 1 Teil der Verbindung der Formel

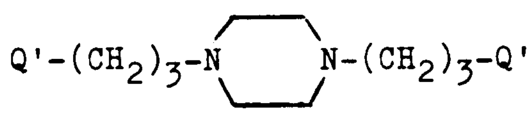

zu und rührt noch eine weitere Stunde bei 65 bis 70 °C nach. Die Suspension wird anschließend abgesaugt und das Pigment mit heißem Wasser neutral gewaschen. Das Pigment wird bei 60 °C im Vakuumtrockenschrank getrocknet und anschließend auf einer Stiftmühle gemahlen. Man erhält 25 Teile eines orangefarbenen Pigmentes.

c) Ausprüfung von Pigmenten in AM-Lack:

Zur Ausprüfung von Pigmenten in einem AM-Lack wird zunächst das Pigment-Lack-Gemisch, das 15 % Pigment enthält, zur Dispergierung einer Schwing- oder Perlmahlung unterworfen. Die Rheologie des Mahlgutes (Millbase-Rheologie) wird mit den Noten 1 (gestockt) bis 5 (dünnflüssig) bewertet. Anschließend wird das Mahlgut durch Zugabe von weiterem AM-Lack auf einen Volltonlack, der 5 % Pigment enthält, verdünnt. Die Viskosität des Volltonlacks wird mit dem Viskospatel bestimmt. Ein Teil des Volltonlacks wird mit 25 %igem Weißlack so verdünnt, daß das Verhältnis Bunt- zu Weißpigment 1:10 (Aufhellung 1:10) beträgt. Dieser Lack wird ebenso wie der Volltonlack auf weißen Kunstdruckkarton aufgezogen und 30 Minuten bei 140 °C eingebrannt. Die Volltonlackierung dient zur Ermittlung der Deckkraft bzw. Lasur des Pigments, die Aufhellung 1:10 der Bewertung der Farbstärke.

Zur Ermittlung des Glanzes wird ein Teil des Volltonlackes durch Zugabe eines n-Butanol-Xylol-Gemisches (1:4) auf eine Viskosität von 4 Sekunden (Viskospatelmessung) eingestellt. Dann wird der Lack auf eine Folie gegossen und nach dem Ablüften 30 Minuten bei 140 °C eingebrannt.

Zur Prüfung der Flockungsstabilität (rub-out-test) wird der mit Weißlack auf ein Verhältnis Bunt- zu Weißpigment 1:10 verdünnte Volltonlack auf einen weißen Kunstdruckkarton aufgezogen. Nach kurzem Antrocknen wird an einer Stelle mit dem Finger nachgerieben. Darauf wird die Lackierung 30 Minuten bei 140 °C eingebrannt. Bei einem flockungsstabilen Pigment tritt kein Farbstärkeunterschied zwischen der geriebenen Fläche und der restlichen Fläche auf, während bei flockulierenden Pigmenten erhebliche Farbstärkeunterschiede auftreten.

Die beschriebenen Prüfverfahren wurden in den nachfolgenden Beispielen nur zum Teil komplett durchgeführt.

d) Das gemäß Beispiel 1b) erhaltene Pigment zeigt einen Glanz von 80 und eine Volltonviskosität von 3,7 Sekunden. Das Pigment ist sehr farbstark und flockuliert nicht.

e) Wird bei der Herstellung des Pigmentes analog Beispiel 1a) und 1b) gearbeitet, aber auf die Zugabe des basischen Pigmentzusatzes verzichtet, dann erhält man ein Pigment, das bei der Lackausprüfung eine Volltonviskosität von 5,3 Sekunden und einen Glanz von nur 30 aufweist. Das Pigment flockuliert erheblich und ist im Vergleich zu dem gemäß Beispiel 1d) erhaltenen viel farbschwächer.

**Beispiel 2**

Gemäß den Ausführungen von Beispiel 1a) und 1b) wurden weitere Orange-Pigmente hergestellt, wobei anstelle des in Beispiel 1b) eingesetzten basischen Pigmentzusatzes die in der nachfolgenden Tabelle aufgeführten Zusätze in den angegebenen Mengen eingesetzt wurden.

| Zusatz | Zusatzmenge (Teile) | Glanz | Volltonviskosität (Sek.) | Farbstärkezunahme + gering ++ mittel +++ stark |
|---|---|---|---|---|
| 1) - | - | 30 | 5,3 | - |
| 2) 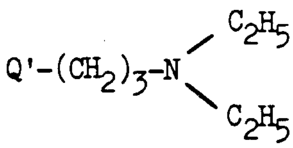 | 1,3 | 88 | 5,0 | +++ |
| 3) 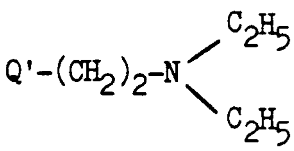 | 1 | 88 | 2,4 | +++ |
| 4) 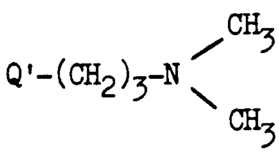 | 1 | 88 | 3,2 | +++ |
| 5) 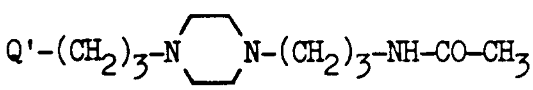 | 1 | 85 | 3,6 | +++ |
| 6) " " | 0,5 | 89 | 2,6 | +++ |
| 7) " " | 0,2 | 64 | 5,5 | ++ |
| 8) 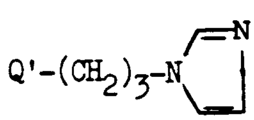 | 1 | 88 | 4,0 | +++ |
| 9) " | 0,5 | 86 | 2,9 | +++ |
| 10) " | 0,2 | 44 | 5,0 | ++ |

| Zusatz | Zusatzmenge (Teile) | Glanz | Volltonviskosität (Sek.) | Farbstärkezunahme + gering ++ mittel +++ stark |
|---|---|---|---|---|
| 11) 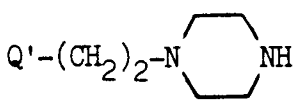 | 1 | 60 | 5,2 | +++ |
| 12) 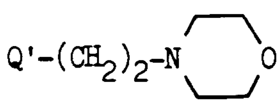 | 1 | 50 | 5,3 | ++ |
| 13) 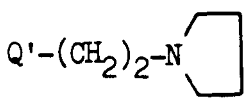 | 1 | 85 | 3,0 | +++ |
| 14) 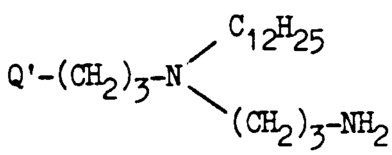 | 1 | 80 | 5,0 | +++ |
| 15) 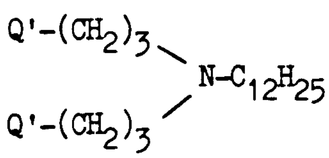 | 1 | 60 | 4,8 | ++ |
| 16) 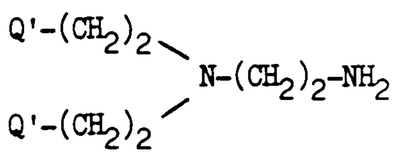 | 1 | 50 | 4,7 | ++ |
| 17) 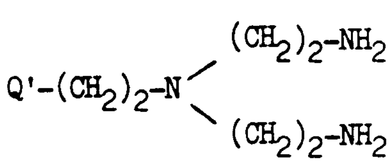 | 1 | 40 | 7,0 | ++ |
| 18) 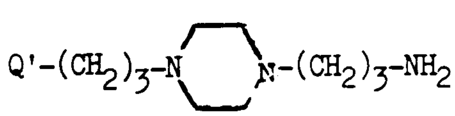 | 1 | 88 | 3,4 | +++ |

**Beispiel 3**

a) 55 Teile Trennsalz, die gemäß Beispiel 1a) erhalten wurden, werden bei 65 - 70 °C im Verlauf von 10 Minuten in 600 Teile Wasser eingetragen. Es wird 1 Stunde bei 65 bis 70 °C nachgerührt. Dann setzt man der Suspension ein Gemisch von 0,35 Teilen der Verbindung A und 0,15 Teilen der Verbindung B

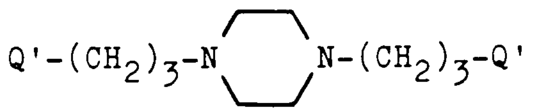 (A)

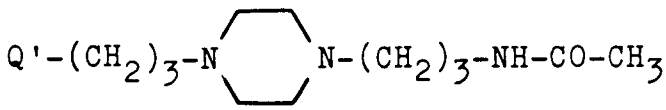 (B)

zu und rührt noch eine weitere Stunde bei 65 bis 70 ° C nach. Dann setzt man der Suspension 30 Teile Isobutanol zu und kocht 3 Stunden am Rückfluß. Anschließend treibt man das Isobutanol durch Wasserdampfdestillation ab und filtriert die Suspension. Das angefallene Pigment wird mit heißem Wasser neutral gewaschen, bei 60 ° C getrocknet und gemahlen.
Bei der Ausprüfung im AM-Lack zeichnet sich das Pigment durch hohe Farbstärke und einen Glanz von 87 aus. Die Millbase-Rheologie wird mit 4 bewertet. Die Überlackierechtheit ist einwandfrei.
b) Wird gemäß Beispiel 3a) gearbeitet, aber unter Zusatz von 0,2 Teilen der Verbindung A und 0,3 Teilen der Verbindung B, dann erhält man ein gleichwertiges Pigment.
c) Wird anstelle von Isobutanol die gleiche Menge n-Pentanol eingesetzt, dann erhält man ein gleichwertiges Pigment.
d) Wird analog Beispiel 3a) gearbeitet, aber ohne Zusatz der Verbindungen A und B, dann erhält man ein farbschwaches Pigment, das bei der Ausprüfung in AM-Lack eine Millbase-Rheologie von 1 und einen Glanz von 35 aufweist.

**Beispiel 4**

a) 55 Teile Trennsalz, die gemäß Beispiel 1a) erhalten wurden, werden bei 65 bis 70 ° C im Verlauf von 10 Minuten in 600 Teile Wasser eingetragen. Es wird eine Stunde bei 65 bis 70 ° C nachgerührt. Dann setzt man der Suspension 0,75 Teile der Verbindung B

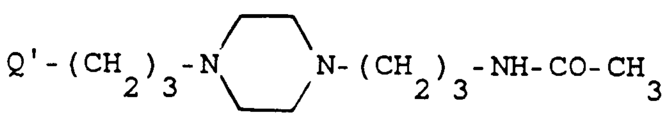 (B)

zu und rührt noch eine weitere Stunde bei 65 bis 70 ° C nach. Darauf wird die Pigmentsuspension abgesaugt und der Filterkuchen mit heißem Wasser neutral gewaschen. Der Filterkuchen wird in 400 Teile Isobutanol eingetragen. Dann wird zum Kochen erhitzt und das Wasser über einen Wasserabscheider ausgekreist. Anschließend wird noch weitere 3 Stunden am Rückfluß gekocht. Darauf destilliert man unter Wasserzugabe das Isobutanol durch Wasserdampfdestillation ab und saugt die wäßrige Suspension ab. Das Pigment wird bei 60 ° C getrocknet und gemahlen.
Das erhaltene Pigment ergibt bei der Einarbeitung in AM-sowie TSA-NAD-Lacke sehr farbstarke Färbungen von einwandfreier Überlackierechtheit. Die Glanzwerte liegen in AM-Lack und TSA-Lack im Bereich 80 bis 85. Die Millbase-Rheologie wird in beiden Lacksystemen mit 5 bewertet. Das Pigment flockuliert nicht und weist einen einwandfreien Rub-out-Test auf.

Wird dagegen bei der Herstellung des Pigmentes auf die Zugabe der Verbindung B verzichtet, dann erhält man ein sehr farbschwaches Pigment, das sehr stark flockuliert, in AM-Lack einen Glanz von nur 35 aufweist und eine sehr ungünstige Millbase-Rheologie (1) zeigt.
b) Verwendet man bei dem Verfahren gemäß Beispiel 4a) als Zusatz anstelle von 0,75 Teilen der Verbindung B eine Mischung von 0,40 Teilen der Verbindung B und 0,35 Teilen der Verbindung A oder eine Mischung von 0,35 Teilen der Verbindung A und 0,40 Teilen der Verbindung C oder eine Mischung von 0,50 Teilen der Verbindung B und 0,25 Teilen der Verbindung D

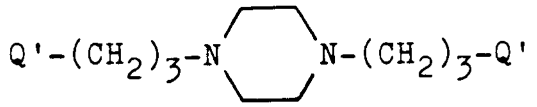 (A)

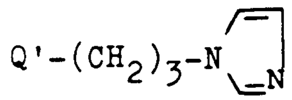 (C)

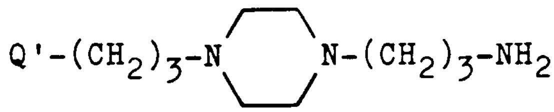 (D)

so erhält man Pigmente gleicher Qualität.

c) Verwendet man bei der Arbeitsweise gemäß Beispiel 4a anstelle von Isobutanol Xylol als Finishmedium, so erhält man wertvolle Pigmente, die gegenüber den gemäß Beispiel 4a) erhaltenen deckender sind und einen noch reineren Farbton aufweisen.

d) Verwendet man bei der Arbeitsweise gemäß Beispiel 4a) anstelle von 0,75 Teilen der Verbindung B 0,85 Teile einer der beiden Verbindungen der Formeln

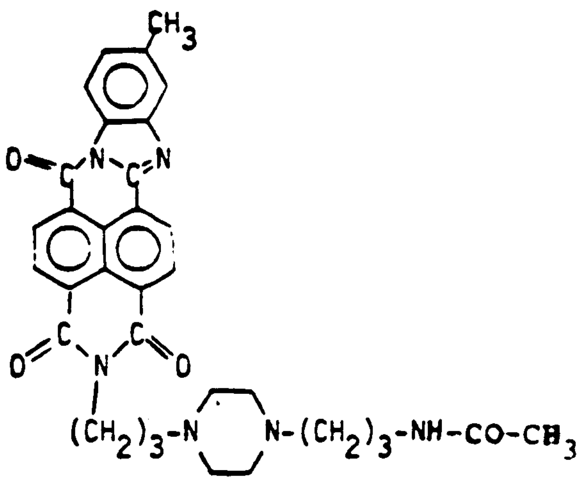

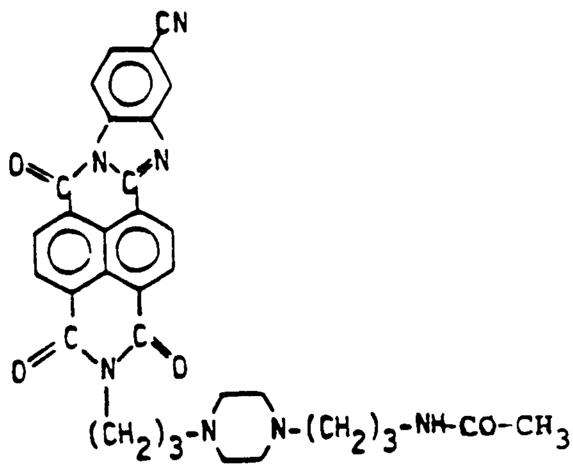

so erhält man Pigmente von vergleichbarer Qualität.

e) Verwendet man bei der Arbeitsweise gemäß Beispiel 4a) anstelle von 0,75 Teilen der Verbindung B 0,9 Teile der Verbindung der Formel

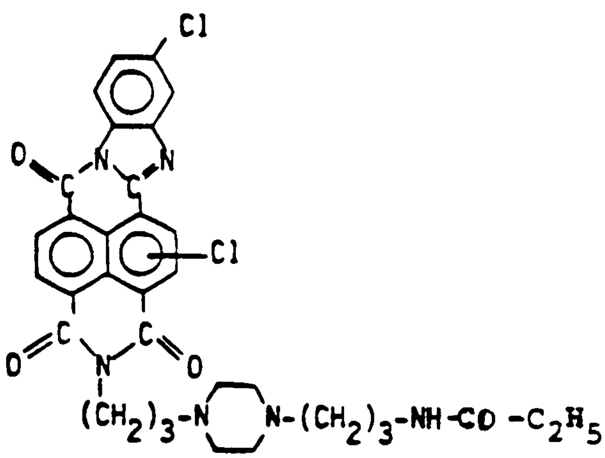

so erhält man ebenfalls wertvolle Pigmente.

f) Setzt man bei der Arbeitsweise gemäß Beispiel 4a) die 0,75 Teile der Verbindung B nicht der wäßrigen Pigmentsuspension zu, sondern gibt sie erst nach dem Eintragen des neutral gewaschenen Filterkuchens in das Isobutanol zu, so erhält man ein Pigment gleicher Qualität.

**Beispiel 5**

a) 25 Teilen trans-Naphthoylen-bis-benzimidazol (C.I. Pigment Orange 43, 71105), das gemäß Fiat Final Report 1313-II entsprechend der Herstellungsvorschrift für Indanthren Brillant Orange GR hergestellt, getrocknet und gemahlen worden war, werden 0,1 Teile der Verbindung C

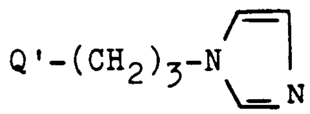

(C)

zugesetzt und gemischt. Bei der Ausprüfung in AM-Lack erhält man gegenüber dem Pigment ohne Zusatz eine um 10 % höhere Farbstärke und einen reineren und gelbstichigeren Farbton.

b) Verwendet man bei der Verfahrensweise gemäß Beispiel 5a) anstelle von 0,1 Teilen der Verbindung C nur 0,05 Teile, dann erhält man bei der Ausprüfung in AM-Lack eine um 5 % höhere Farbstärke.

c) Setzt man das gemäß Beispiel 5a) erhaltene Pigment in einem Anwendungsmedium mit hohem Xylolgehalt ein, dann tritt auch nach längerem Stehen der Pigmentdispersion bei Raumtemperatur kein Farbstärkeverlust auf. Dagegen tritt in diesem Fall bei Einsatz des Pigments ohne Zusatz der Verbindung C ein erheblicher Farbstärkeabfall ein.

**Beispiel 6**

a) 30 Teile cis-Naphthoylen-bis-benzimidazol (C.I. Vat Red 15, 71100) der α-Modifikation werden in 470 Teile Chlorbenzol eingetragen. Man gibt 1,3 Teile 33 %ige Natronlauge zu und rührt 1 Stunde bei 20 bis 30 °C. Dann erhitzt man zum Kochen und kocht 3 Stunden am Rückfluß. Anschließend kühlt man auf 70 bis 80 °C ab und gibt 1,5 Teile der Verbindung B

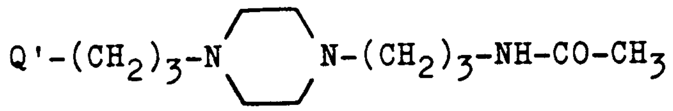

(B)

zu. Man rührt noch 1 Stunde bei 70 bis 80 °C nach. Dann gibt man Wasser zu und destilliert das Chlorbenzol mit Wasserdampf ab. Darauf saugt man ab, wäscht den Filterkuchen mit heißem Wasser und trocknet bei 60 °C im Vakuumtrockenschrank. Das Pigment wird auf einer Stiftmühle gemahlen.

Man erhält 31,5 Teile eines roten Pigments, das in der β-Modifikation vorliegt.

Bei der Ausprüfung in AM-Lack erhält man farbstarke rote Färbungen. Die Millbase-Rheologie (15 %ig) wird mit 5 und der Glanz mit 85 bewertet. Das Pigment flockuliert nicht.

Verzichtet man bei der Pigmentherstellung gemäß Beispiel 6a) auf den Zusatz der Verbindung B, dann erhält man ein Pigment, das eine Millbase-Rheologie von nur 1 bis 2 und einen Glanz von nur 30 aufweist.

b) Verwendet man bei dem Verfahren gemäß Beispiel 6a) anstelle der 30 Teile cis-Naphthoylen-bis-benzimidazol 30 Teile eines Mischkristallpigmentes der α-Modifikation, das sich aus 27 Teilen cis-Naphthoylen-bis-benzimidazol (C.I. Vat Red 15) und 3 Teilen trans-Naphthoylen-bis-benzimidazol (Pigment Orange 43) zusammensetzt, dann erhält man ein Pigment gleicher Qualität.

c) Verwendet man bei dem Verfahren gemäß Beispiel 6a) anstelle von 1,5 Teilen der Verbindung B jeweils 1,5 Teile der Verbindungen der Formeln

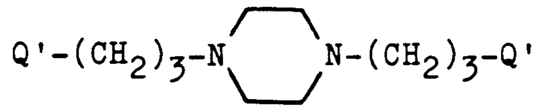

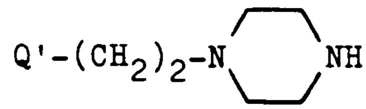

so erhält man Pigmente gleicher Qualität.

d) Verwendet man bei dem Verfahren gemäß Beispiel 6a) anstelle von 1,5 Teilen der Verbindung B 2,5 Teile dieser Verbindung, so erhält man ein Pigment, das selbst in einer 24 %igen Pigmentdispersion noch eine Millbase-Rheologie von 3 - 4 aufweist.

**Beispiel 7**

a) 80 Teile 4,10-Dibromanthanthron (C.I. Pigment Red 168, 59300) werden in 640 Teilen 100 %iger Schwefelsäure bei 20 bis 30 °C unter gutem Rühren gelöst. Dann läßt man unter Kühlung bei 20 bis 30 °C in etwa 2 Stunden 224 Teile einer 50 %igen Schwefelsäure zulaufen. Es wird mehrere Stunden bei 20 bis 30 °C nachgerührt. Dann wird abgesaugt und der Filterkuchen mit 2800 Teilen 85 %iger Schwefelsäure gewaschen. Anschließend wird der Filterkuchen mit Wasser neutral gewaschen.

Man erhält 196 Teile eines 40 %igen wäßrigen Filterkuchens (entsprechend 78,4 Teilen Pigment Red 168).

b) Der gemäß Beispiel 7a) anfallende Filterkuchen wird in 128 Teilen Wasser verrührt. Dann rührt man 2 Teile der Verbindung der Formel

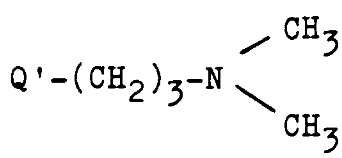

ein und füllt anschließend die Suspension in eine Perlmühle vom Typ Drais PM1, die mit Zirkonoxidperlen mit 1 bis 1,5 mm Durchmesser gefüllt ist. Die Suspension wird in der Perlmühle 2 Stunden bei einer Umdrehungszahl von etwa 2700 UPM gemahlen. Darauf wird die Suspension von den Perlen durch Sieben abgetrennt und die Perlen mit etwa 260 Teilen Wasser gewaschen. Man erhält etwa 580 Teile einer verdünnten, wäßrigen Pigmentsuspension. Dieser Suspension werden 80 Teile Isobutanol zugesetzt. Anschließend erhitzt man zum Kochen und kocht 3 Stunden am Rückfluß. Das Isobutanol wird dann durch Wasserdampfdestillation abdestilliert. Das Pigment wird abgesaugt, mit Wasser gewaschen und bei 80 °C im Vakuumtrockenschrank getrocknet. Man erhält 79,3 Teile eines farbstarken Pigmentes, das in AM-Lack einen Glanz von 80 besitzt und dessen Millbase-Rheologie mit der Note 4 bewertet wird.

Verzichtet man bei dem Verfahren gemäß Beispiel 7b) auf die Zugabe des basischen Pigmentzusatzes, so erhält man ein Pigment, das in AM-Lack um etwa 15 % farbschwächer ist, dessen Millbase-Rheologie mit nur 1 bewertet wird und das einen Glanz von nur 64 aufweist.

c) Setzt man bei dem Verfahren gemäß Beispiel 7b) anstelle der 2 Teile des basischen Pigmentzusatzes nur 0,8 Teile derselben Verbindung zu, so erhält man ein Pigment, das in AM-Lack einen Glanz von 75 aufweist und dessen Millbase-Rheologie mit 2 bis 3 bewertet wird. Das Pigment ist gegenüber einem Pigment, das nach dem gleichen Verfahren ohne Zugabe des basischen Pigmentzusatzes hergestellt wurde, um etwa 5 % farbstärker.

d) Verwendet man bei dem Verfahren gemäß Beispiel 7b) anstelle des gemäß Beispiel 7a) erhaltenen Filterkuchens eine äquivalente Menge Filterkuchen, der nach dem im Fiat Final Report 1313-II für die Herstellung von Indanthren Brillant Orange RK beschriebenen Verfahren erhalten wurde, so erhält man ein Pigment vergleichbarer Qualität.

**Beispiel 8**

Verwendet man bei dem Verfahren gemäß Beispiel 7b) anstelle des dort verwendeten basischen Pigmentzusatzes die in der nachfolgenden Tabelle angeführten Pigmentzusätze, so erhält man folgende Resultate:

| Zusatz | Zusatzmenge (Teile) | Glanz | Millbase-Rheologie | Vollton-viskosität (Sek.) | Farbstärke-zunahme |
|---|---|---|---|---|---|
| 1) - | - | 64 | 1 | 4,1 | - |
| 2) 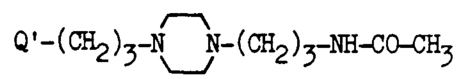 | 2 | 75 | 4 | 3,3 | + 5 % |
| 3) 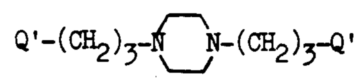 | 2 | 83 | 2 - 3 | 3,1 | + 10 % |
| 4) " " | 4 | 80 | 4 | 2,6 | + 12 % |

| Zusatz | Zusatzmenge (Teile) | Glanz | Millbase-Rheologie | Vollton-viskosität (Sek.) | Farbstärke-zunahme |
|---|---|---|---|---|---|
| 5) 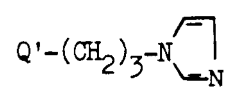 | 2 | 82 | 3 - 4 | 3,4 | + 10 % |
| 6) 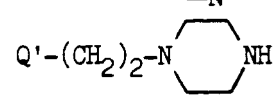 | 2 | 81 | 4 - 5 | 3,7 | + 4 % |
| 7) 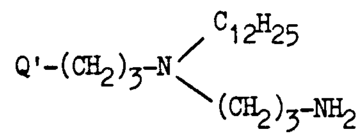 | 2 | 81 | 3 - 4 | 3,4 | + 8 % |

**Beispiel 9**

39 Teile Indanthren Brillant Orange RK (C.I. Pigment Red 168), das nach dem im Fiat Final Report 1313-II beschriebenen Verfahren hergestellt und darauf getrocknet wurde, werden zusammen mit 1 Teil der Verbindung der Formel

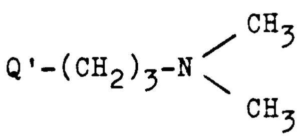

in 1000 Teile Wasser verrührt. Dann werden 80 Teile 33 %ige Natronlauge und 60 Teile Natriumdithionit zugegeben. In Stickstoffatmosphäre wird 3 Stunden bei 20 bis 25 °C gerührt, wobei die Verküpung stattfindet. Dann läßt man bei 20 bis 25 °C langsam 22,3 Teile 85 %ige Phosphorsäure zulaufen. Es stellt sich dabei ein pH von 10 bis 11 ein. Nach einstündigem Nachrühren bei 20 bis 25 °C läßt man bei 20 bis 25 °C 90 Teile 35 %iges Wasserstoffsuperoxid zulaufen und hält durch gleichzeitiges Zulaufen von 46,3

Teilen 33 %iger Natronlauge den pH-Bereich 10 bis 11 konstant. Man rührt 15 Stunden bei 20 bis 25 °C nach. Dann saugt man die Pigmentsuspension ab und wäscht den Filterkuchen mit Wasser neutral. Der Filterkuchen wird anschließend in 224 Teilen Wasser angerührt. Nach Zugabe von 2,8 Teilen Natriumcarbonat und 40 Teilen Nitrobenzol wird zum Kochen erhitzt und 3 Stunden am Rückfluß gekocht. Darauf wird das Nitrobenzol durch Wasserdampfdestillation abdestilliert. Die Pigmentsuspension wird abgesaugt und der Filterkuchen mit Wasser neutral gewaschen. Das Pigment wird bei 80 °C getrocknet und gemahlen. Man erhält 38,8 Teile eines farbstarken Pigmentes, das einen Glanz von 87 aufweist. Die Millbase-Rheologie wird mit 5 bewertet.

**Beispiel 10**

a) 20 Teile des Azopigmentes Pigment Red 188 (12467) und 1 Teil des Zusatzes der Formel

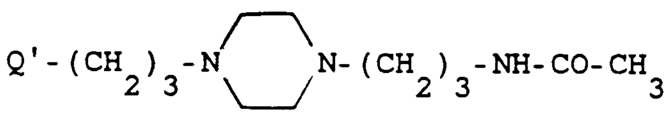

werden in feingemahlener Form gründlich gemischt. Diese Pigmentzubereitung flockuliert nicht und ist farbstärker als das Pigment ohne den Zusatz. Den Vergleich der sonstigen coloristischen Eigenschaften in AM-Lack zeigt die Tabelle:

| | Viskosität (Sek.) | Millbase-Rheologie | Glanz |
|---|---|---|---|
| ohne Zusatz | 3,7 | 2 - 3 | 50 |
| mit Zusatz | 2,7 | 5 | 89 |

b) Verwendet man anstelle von 1 Teil des Zusatzes nur 0,6 Teile desselben Zusatzes, dann erhält man eine Pigmentzubereitung, die der gemäß Beispiel 10a) erhaltenen gleichwertig ist.

**Beispiel 11**

20 Teile des Azopigmentes C.I. Pigment Orange 36 (11780, deckende Form) und 1 Teil des in Beispiel 10a) verwendeten Zusatzes werden in gemahlener Form gründlich gemischt. Die erhaltene Pigmentzubereitung ist bei der Ausprüfung in AM-Lack etwa 10 % farbstärker als das Pigment ohne Zusatz.

**Beispiel 12**

20 Teile des Azopigmentes C.I. Pigment Brown 25 (12510) und 0,6 Teile des in Beispiel 10a) verwendeten Zusatzes werden in gemahlener Form gründlich gemischt. Die erhaltene Pigmentzubereitung ergibt bei der Ausprüfung in AM-Lack einen Glanz von 75, während das Pigment ohne Zusatz nur einen Glanz von 40 aufweist.

**Beispiel 13**

20 Teile C.I. Pigment Yellow 110 (56280) der Formel

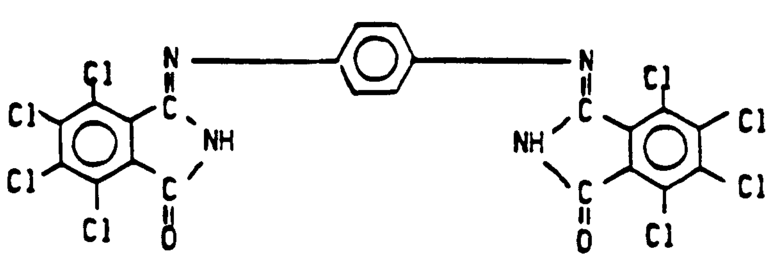

und 0,6 Teile des in Beispiel 10a) verwendeten Zusatzes werden in gemahlener Form gründlich gemischt. Die erhaltene Pigmentzubereitung ergibt bei der Ausprüfung in AM-Lack einen Glanz von 45, während das Pigment ohne Zusatz nur einen Glanz von 22 aufweist.

**Beispiel 14**

20 Teile C.I. Pigment Red 254 der Formel

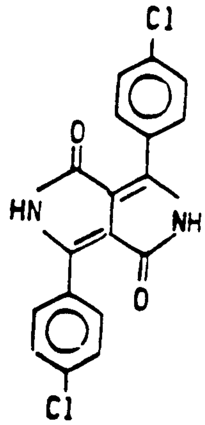

und 0,6 Teile des in Beispiel 10a) verwendeten Zusatzes werden in gemahlener Form gründlich gemischt. Die erhaltene Pigmentzubereitung ergibt bei der Ausprüfung in AM-Lack einen Glanz von 87, während das Pigment ohne Zusatz nur einen Glanz von 65 aufweist.

**Beispiel 15**

20 Teile C.I. Pigment Red 149 (71137) der Formel

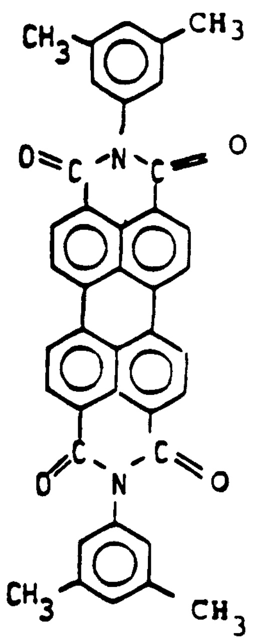

und 1 Teil des in Beispiel 10a) verwendeten Zusatzes werden in gemahlener Form gründlich gemischt. Die erhaltene Pigmentzubereitung ergibt bei der Ausprüfung in AM-Lack, ausgehend von einem Volltonlack mit 3 % Pigment, einen Glanz von 68, während das Pigment ohne Zusatz nur einen Glanz von 30 aufweist.

**Patentansprüche**

**Patentansprüche für folgende Vertragsstaaten : AT, BE, CH, DE, DK, FR, GB, GR, IT, LI, LU, NL, SE**

**1.** Pigmentzubereitungen aus organischen Pigmenten und basischen Zusätzen der allgemeinen Formel I

$(Q - A)_xY$ (I),

in welcher Q einen Rest der allgemeinen Formel II

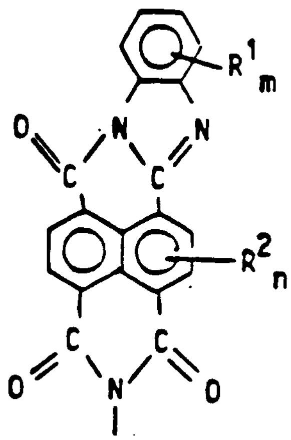

(II)

darstellt, in welcher $R^1$ ein Halogenatom, eine Alkyl $(C_1-C_4)$-, Alkoxy$(C_1-C_4)$- oder Cyanogruppe bedeutet, wobei im Fall m > 1 $R^1$ die genannten Bedeutungen in Kombination haben kann, $R^2$ ein Halogenatom darstellt, m und n ganze Zahlen von 0 bis 4 bedeuten, A eine chemische Bindung oder eine bivalente Gruppe aus der Reihe $-(CH_2)_p-$, $-CH^3R^4-$, Arylen, -S-, -O- und $-NR^5-$ oder eine chemische sinnvolle Kombination dieser bivalenten Gruppen darstellt, wobei p eine ganze Zahl von 1 bis 12, $R^3$ ein Wasserstoffatom oder eine Alkyl$(C_1-C_6)$-Gruppe, $R^4$ eine Alkyl$(C_1-C_6)$-Gruppe und $R^5$ ein Wasserstoffatom oder eine Alkyl$(C_1-C_6)$-Gruppe bedeuten, Y ein tertiäres Stickstoffatom oder eine Gruppe

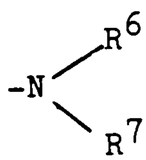

oder $\rangle N-R_8$, in welchen $R^6$, $R^7$ uns $R^8$ Alkyl$(C_1-C_{20})$-oder Alkenyl$(C_1-C_{20})$-Gruppen bedeuten, deren Kohlenstoffketten durch Heteroatome unterbrochen sein können und/oder eine endständige Hydroxyl- oder primäre Aminogruppe oder eine Acylaminogruppe tragen können, oder einen cycloaliphatischen $(C_5-C_6)$ oder araliphatischen Rest oder einen Rest -alkylen-Heteroaryl bedeuten können, oder Y einen gesättigten oder ungesättigten heterocyclischen Rest darstellt, wobei mindestens ein tertiäres Stickstoffatom in den genannten Bedeutungen für Y enthalten ist und x eine ganze Zahl von 1 bis 6 bedeutet.

**2.** Pigmentzubereitungen gemäß Anspruch 1, dadurch gekennzeichnet, daß im Rest Q der dort genannten allgemeinen Formel II m 0 oder 1 und n 0 ist, A die bivalente Gruppe $-(CH_2)_{2-4}-$, Y eine Dialkyl$(C_1-C_6)$-aminogruppe bedeutet, deren Alkylgruppen endständige Hydroxyl- oder primäre Aminogruppen oder Acylaminogruppen tragen können, oder Y einen gesättigten oder ungesättigten heterocyclischen Rest darstellt, der mindestens ein tertiäres Stickstoffatom enthält und x eine ganze Zahl von 1 bis 3 bedeutet.

3. Pigmentzubereitungen gemäß Anspruch 1, dadurch gekennzeichnet, daß im Rest Q der dort genannten allgemeinen Formel II m und n Null sind, A die bivalente Gruppe $-(CH_2)_{2-3}-$ , Y die Dimethylamino- oder Diethylaminogruppe oder einem Imidazol- oder Piperazinrest und x die Zahl 1 oder 2 bedeuten.

4. Pigmentzubereitungen gemäß Anspruch 1, dadurch gekennzeichnet, daß im Rest Q der dort genannten allgemeinen Formel II m und n Null sind, A die bivalente Gruppe $-(CH_2)_{2-3}-$ bedeutet, Y den Rest

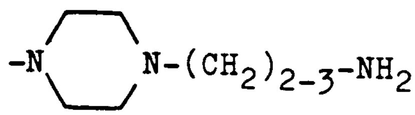

oder den Rest

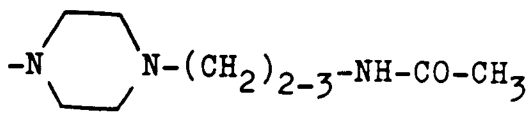

darstellt und x = 1 ist.

5. Pigmentzubereitungen gemäß Anspruch 1, dadurch gekennzeichnet, daß im Rest Q der dort genannten allgemeinen Formel II m und n Null sind, A die bivalente Gruppe $-(CH_2)_{2-3}-$ bedeutet, Y den bivalenten Rest

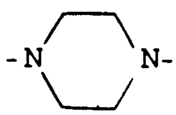

darstellt und x = 2 ist.

6. Pigmentzubereitungen nach mindestens einem der Ansprüche 1 bis 3, dadurch gekennzeichnet, daß diese Mischungen die in den Pigmentzubereitungen der Ansprüche 4 und 5 enthaltenen basischen Zusätze enthalten.

7. Pigmentzubereitungen nach mindestens einem der Ansprüche 1 bis 6, dadurch gekennzeichnet, daß die darin enthaltenen Pigmente Azopigmente oder polycyclische Pigmente sind.

8. Pigmentzubereitungen nach mindestens einem der Ansprüche 1 bis 6, dadurch gekennzeichnet, daß die darin enthaltenen Pigmente polycyclische Pigmente der Anthrachinon-, Anthrapyrimidin-, Anthanthron-, Chinacridon-, Chinophthalon-, Diketopyrrolopyrrol-, Dioxazin-, Flavanthron-, Indanthron-, Isoindolin-, Isoindolinon-, Isoviolanthron-, Perinon-, Perylen-, Phthalocyanin-, Pyranthron- oder Thioindigo-Reihe sind.

9. Pigmentzubereitungen nach mindestens einem der Ansprüche 1 bis 6, dadurch gekennzeichnet, daß die darin enthaltenen Pigmente als Reinpigmente oder in Form physikalischer Mischungen oder als Mischkristalle aus zwei oder mehreren Pigmenten vorliegen.

10. Pigmentzubereitungen nach mindestens einem der Ansprüche 1 bis 6, dadurch gekennzeichnet, daß die darin enthaltenen Pigmente aus der Reihe der Perinon- oder Anthanthronpigmente stammen.

11. Pigmentzubereitungen nach mindestens einem der Ansprüche 1 bis 6, dadurch gekennzeichnet, daß das darin enthaltene Pigment ein cis- und/oder trans-Naphthoylenbisbenzimidazol oder das 4,10-Dibromanthanthron ist.

**12.** Pigmentzubereitungen nach mindestens einem der Ansprüche 1 bis 11, dadurch gekennzeichnet, daß die Zubereitungen aus 99,9 bis 85 Gewichtsprozent organischer Pigmente und 0,1 bis 15 Gewichtsprozent mindestens eines basischen Zusatzes der in Anspruch 1 genannten allgemeinen Formel I bestehen.

**13.** Pigmentzubereitungen nach mindestens einem der Ansprüche 1 bis 11, dadurch gekennzeichnet, daß die Zubereitungen aus 99 bis 92 Gewichtsprozent organischer Pigmente und 1 bis 8 Gewichtsprozent mindestens eines basischen Zusatzes der in Anspruch 1 genannten allgemeinen Formel I bestehen.

**14.** Verwendung der Pigmentzubereitungen nach mindestens einem der Ansprüche 1 bis 13 zum Pigmentieren von hochmolekularen organischen Materialien.

**15.** Verwendung der Pigmentzubereitungen nach mindestens einem der Ansprüche 1 bis 13 zum Pigmentieren von Lacksystemen.

**Patentansprüche für folgenden Vertragsstaat : ES**

**1.** Verfahren zur Herstellung von Pigmentzubereitungen aus organischen Pigmenten und basischen Zusätzen der allgemeinen Formel I

$(Q - A)_x Y$ (I),

in welcher Q einen Rest der allgemeinen Formel II

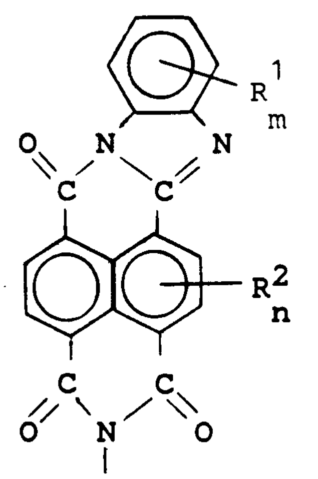

(II)

darstellt, in welcher $R^1$ ein Halogenatom, eine Alkyl $(C_1-C_4)$-, Alkoxy$(C_1-C_4)$- oder Cyanogruppe bedeutet, wobei im Fall m >1 $R^1$ die genannten Bedeutungen in Kombination haben kann, $R^2$ ein Halogenatom darstellt, m und n ganze Zahlen von 0 bis 4 bedeuten, A eine chemische Bindung oder eine bivalente Gruppe aus der Reihe $-(CH_2)_p-$, $-CR^3R^4-$, Arylen, -S-, -O- und $-NR^5$ - oder eine chemisch sinnvolle Kombination dieser bivalenten Gruppen darstellt, wobei p eine ganze Zahl von 1 bis 12, $R^3$ ein Wasserstoffatom oder eine Alkyl$(C_1-C_6)$-Gruppe, $R^4$ eine Alkyl$(C_1-C_6)$-Gruppe und $R^5$ ein Wasserstoffatom oder eine Alkyl$(C_1-C_6)$-Gruppe bedeuten, Y ein tertiäres Stickstoffatom oder eine Gruppe

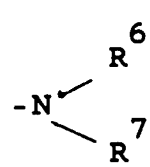

oder $>N-R_8$, in welchen $R^6$, $R^7$ und $R^8$ Alkyl$(C_1-C_{20})$-oder Alkenyl$(C_1-C_{20})$-Gruppen bedeuten, deren Kohlenstoffketten durch Heteroatome unterbrochen sein können und/oder eine endständige Hydroxyl-

oder primäre Aminogruppe oder eine Acylaminogruppe tragen können, oder einen cycloaliphatischen ($C_5$-$C_6$) oder araliphatischen Rest oder einen Rest -alkylen-Heteroaryl bedeuten können, oder Y einen gesättigten oder ungesättigten heterocyclischen Rest darstellt, wobei mindestens ein tertiäres Stickstoffatom in den genannten Bedeutungen für Y enthalten ist und x eine ganze Zahl von 1 bis 6 bedeutet, dadurch gekennzeichnet, daß man

a) die basischen Zusätze der genannten Formel (I) dem wasserfeuchten Preßkuchen des genannten organischen Pigments vor der Trocknung zusetzt und einarbeitet, oder

b) die gemahlenen basischen Zusätze der genannten Formel (I) mit dem Pulver der organischen Pigmente mischt, oder

c) die basischen Zusätze der genannten Formel (I) vor, während oder nach der Pigmentbildung zugibt, oder

d) die basischen Zusätze der genannten Formel (I) vor, während oder nach einem Pigmentverteilungsprozess zugibt, oder

e) die basichen Zusätze der genannten Formel (I) und die organischen Pigmente einem gemeinsamen Umküpungsfinish unterwirft, oder

f) die basichen Zusätze der genannten Formel (I) im Rahmen der Trockenmahlung der organischen Pigmente mit oder ohne zusätzlichen Mahlhilfsmitteln auf einer Roll-oder Schwingmühle oder im Rahmen einer Naßmahlung der organischen Pigmente in wäßrigem, wäßrig-organischem oder organischem Mahlmedium zugibt, oder

g) die basichen Zusätze der genannten Formel (I) vor, während oder nach einem Finish der organischen Pigmente in wäßrigem, wäßrig-organischem oder organischem Medium bei Normaldruck oder unter erhöhtem Druck zugibt.

**2.** Verfahren gemäß Anspruch 1, dadurch gekennzeichnet, daß im Rest Q der dort genannten allgemeinen Formel II m = 0 oder 1 und n = 0 ist, A die bivalente Gruppe $-(CH_2)_{2-4}-$,Y eine Dialkyl($C_1$-$C_6$)-aminogruppe bedeutet, deren Alkylgruppen endständige Hydroxyl- oder primäre Aminogruppen oder Acylaminogruppen tragen können, oder Y einen gesättigten oder ungesättigten heterocyclischen Rest darstellt, der mindestens ein tertiäres Stickstoffatom enthält und x eine ganze Zahl von 1 bis 3 bedeutet.

**3.** Verfahren nach Anspruch 1, dadurch gekennzeichnet, daß im Rest Q der dort genannten allgemeinen Formel II m und n Null sind, A die bivalente Gruppe $-(CH_2)_{2-3}-$, Y die Dimethylamino- oder Diethylaminogruppe oder einen Imidazol- oder Piperazinrest und x die Zahl 1 oder 2 bedeuten.

**4.** Verfahren nach Anspruch 1, dadurch gekennzeichnet, daß im Rest Q der dort genannten allgemeinen Formel II m und n Null sind, A die bivalente Gruppe $-(CH_2)_{2-3}-$bedeutet, Y den Rest

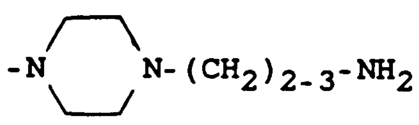

oder den Rest

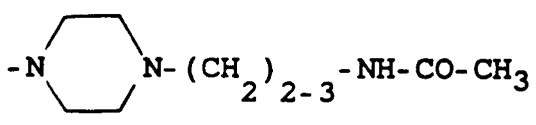

darstellt und x = 1 ist.

**5.** Verfahren nach Anspruch 1, dadurch gekennzeichnet, daß im Rest Q der dort genannten allgemeinen Formel II m und n Null sind, A die bivalente Gruppe $-(CH_2)_{2-3}-$bedeutet, Y den bivalenten Rest

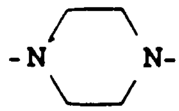

darstellt und x = 2 ist.

**6.** Verfahren nach mindestens einem der Ansprüche 1 bis 5, dadurch gekennzeichnet, daß die organischen Pigmente Azopigmente oder polycyclische Pigmente sind.

**7.** Verfahren nach mindestens einem der Ansprüche 1 bis 6, dadurch gekennzeichnet, daß die organischen Pigmente polycyclische Pigmente der Anthrachinon-, Anthrapyrimidin-, Anthanthron-, Chinacridon-, Chinophthalon-, Diketopyrrolopyrrol-, Dioxazin-, Flavanthron-, Indanthron-, Isoindolin-, Isoindolinon-, Isoviolanthron-, Perinon-, Perylen-, Phthalocyanin-, Pyranthron- oder Thioindigo-Reihe sind.

**8.** Verfahren nach mindestens einem der Ansprüche 1 bis 5, dadurch gekennzeichnet, daß die organischen Pigmente als Reinpigmente oder in Form physikalischer Mischungen oder als Mischkristalle aus zwei oder mehreren Pigmenten vorliegen.

**9.** Verfahren nach mindestens einem der Ansprüche 1 bis 5, dadurch gekennzeichnet, daß die organischen Pigmente aus der Reihe der Perinon- oder Anthanthronpigmente stammen.

**10.** Verfahren nach mindestens einem der Ansprüche 1 bis 5, dadurch gekennzeichnet, daß das organische Pigment ein cis- und/oder trans-Naphthoylenbisbenz imidazol oder das 4,10-Dibromanthanthron ist.

**11.** Verfahren nach mindestens einem der Ansprüche 1 bis 10, dadurch gekennzeichnet, daß man die organischen Pigmente und die basischen Zusätze in solchen Mengenverhältnissen einsetzt, daß die erhaltenen Pigmentzubereitungen 99,9 bis 85 Gewichtsprozent organischer Pigmente und 0,1 bis 15 Gewichtsprozent mindestens eines basischen Zusatzes der in Anspruch 1 genannten allgemeinen Formel I enthalten.

**12.** Verfahren nach mindestens einem der Ansprüche 1 bis 10, dadurch gekennzeichnet, daß man die organischen Pigmente und die basischen Zusätze in solchen Mengenverhältnissen einsetzt, daß die erhaltenen Pigmentzubereitungen 99 bis 92 Gewichtsprozent organischer Pigmente und 1 bis 8 Gewichtsprozent mindestens eines basischen Zusatzes der in Anspruch 1 genannten allgemeinen Formel I enthalten.

**13.** Verfahren zum Pigmentieren von hochmolekularen organischen Materialien, dadurch gekennzeichnet, daß man zum Pigmentieren die nach Ansprüchen 1 bis 12 erhältlichen Pigmentzubereitungen einsetzt.

**14.** Verfahren zum Pigmentieren von Lacksystemen, dadurch gekennzeichnet, daß man zum Pigmentieren die nach Ansprüchen 1 bis 12 erhältlichen Pigmentzubereitungen einsetzt.

**Claims**
**Claims for the following Contracting States : AT, BE, CH, DE, DK, FR, GB, GR, IT, LI, LU, NL, SE**

**1.** A pigment preparation consisting of organic pigments and basic additives of the formula I

$(Q - A)_xY$ (I),

in which Q is a radical of the formula II

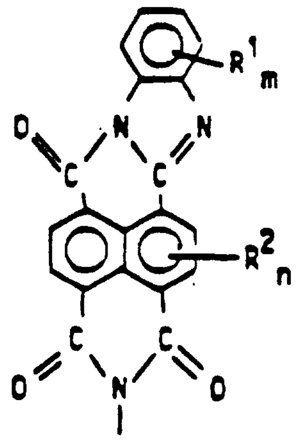

(II)

in which $R^1$ is a halogen atom, a $C_1$-$C_4$-alkyl, $C_1$-$C_4$-alkoxy or cyano group, where in the case that m > 1 $R^1$ can have a combination of the meanings mentioned, $R^2$ is a halogen atom, m and n are integors from 0 to 4, A is a chemical bond or a divalent group from the series consisting of $-(CH_2)_p-$, $-CR^3R^4-$, arylene, -S-, -O- and $-NR^5-$ or a chemically reasonable combination of these divalent groups, in which p is an integer from 1 to 12, $R^3$ is a hydrogen atom or a $C_1$-$C_6$-alkyl group, $R^4$ is a $C_1$-$C_6$-alkyl group and $R^5$ is a hydrogen atom or a $C_1$-$C_6$-alkyl group, Y is a tertiary nitrogen atom or a group

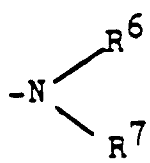

or $\rangle$N-$R_8$ , in which $R^6$, $R^7$ and $R^8$ are $C_1$-$C_{20}$-alkyl or $C_1$-$C_{20}$-alkenyl groups whose carbon chains can be interrupted by hetero-atoms and/or can carry a terminal hydroxyl or primary amino group or an acylamino group or can be a cycloaliphatic ($C_5$-$C_6$) or araliphatic radical or an alkylene-heteroaryl radical, or Y is a saturated or unsaturated heterocyclic radical in which at least one tertiary nitrogen atom is included in the meanings mentioned for Y, and x is an integer from 1 to 6.

**2.** A pigment preparation as claimed in claim 1, wherein in the radical Q of the formula II mentioned there m is 0 or 1 and n is 0, A is the divalent group $-(CH_2)_{2-4}$, Y is a dialkyl($C_1$-$C_6$)-amino group whose alkyl groups can carry terminal hydroxyl or primary amino groups or acylamino groups or Y is a saturated or unsaturated heterocyclic radical which contains at least one tertiary nitrogen atom and x is an integer from 1 to 3.

**3.** A pigment preparation as claimed in claim 1, wherein in the radical Q of the formula II mentioned there m and n are zero, A is the divalent group $-(CH_2)_{2-3}-$, Y is the dimethylamino or diethylamino group or an imidazole or piperazine radical and x is the number 1 or 2.

**4.** A pigment preparation as claimed in claim 1, wherein in the radical Q of the formula II mentioned there m and n are zero, A is the divalent group $(CH_2)_{2-3}-$, Y is the radical

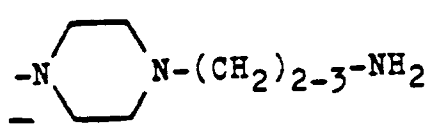

or the radical

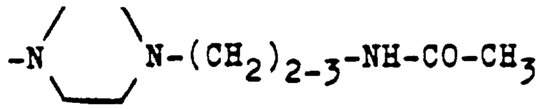

and x is 1.

**5.** A pigment preparation as claimed in claim 1, wherein in the radical Q of the formula II mentioned there m and n are zero, A is the divalent group $-(CH_2)_{2-3}-$, Y is the divalent radical

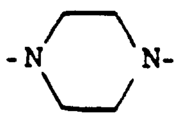

and x is 2.

**6.** A pigment preparation as claimed in at least one of claims 1 to 3, wherein this mixture contains the basic additives contained in the pigment preparations of claims 4 and 5.

**7.** A pigment preparation as claimed in at least one of claims 1 to 6, wherein the pigments contained therein are azo pigments or polycyclic pigments.

**8.** A pigment preparation as claimed in at least one of claims 1 to 6, wherein the pigments contained therein are polycyclic pigments of the anthraquinone, anthrapyrimidine, anthanthrone, quinacridone, quinophthalone, diketopyrrolopyrrole, dioxazine, flavanthrone, indanthrone, isoindoline, isoindolinone, isoviolanthrone, perinone, perylene, phthalocyanine, pyranthrone or thioindigo series.

**9.** A pigment preparation as claimed in at least one of claims 1 to 6, wherein the pigments contained therein are present as pure pigments or in the form of physical mixtures or as mixed crystals of two or more pigments.

**10.** A pigment preparation as claimed in at least one of claims 1 to 6, wherein the pigments contained therein are from the series of perinone or anthanthrone pigments.

**11.** A pigment preparation as claimed in at least one of claims 1 to 6, wherein the pigment contained therein is a cis- and/or trans-naphthoylenebisbenzimidazole or 4,10-dibromoanthanthrone.

**12.** A pigment preparation as claimed in at least one of claims 1 to 11, wherein the preparation consists of 99.9 to 85 % by weight of organic pigments and 0.1 to 15 % by weight of at least one basic additive of the formula I mentioned in claim 1.

**13.** A pigment preparation as claimed in at least one of claims 1 to 11, wherein the preparation consists of 99 to 92 % by weight of organic pigments and 1 to 8 % by weight of at least one basic additive of the formula I mentioned in claim 1.

**14.** Use of a pigment preparation as claimed in at least one of claims 1 to 13 for the pigmenting of high-molecular-weight organic materials.

**15.** Use of a pigment preparation as claimed in at least one of claims 1 to 13 for the pigmenting of lacquer systems.

**Claims for the following Contracting State : ES**

**1.** A process for the preparation of a pigment preparation consisting of organic pigments and basic additives of the formula I

$(Q - A)_xY$ (I),

in which Q is a radical of the formula II

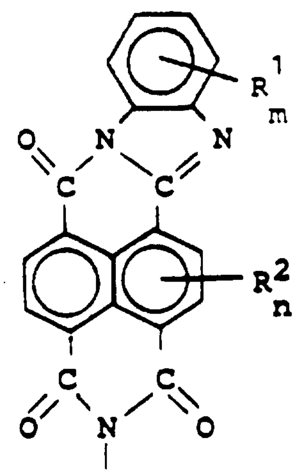

(II)

in which $R^1$ is a halogen atom, a $C_1$-$C_4$-alkyl, $C_1$-$C_4$-alkoxy or cyano group, where in the case that m > 1 $R^1$ can have a combination of the meanings mentioned, $R^2$ is a halogen atom, m and n are integers from 0 to 4, A is a chemical bond or a divalent group from the series consisting of $-(CH_2)_p-$, $-CR^3R^4-$, arylene, -S-, -O- and $-NR^5-$ or a chemically reasonable combination of these divalent groups, in which p is an integer from 1 to 12, $R^3$ is a hydrogen atom or a $C_1$-$C_6$-alkyl group, $R^4$ is a $C_1$-$C_6$-alkyl group and $R^5$ is a hydrogen atom or a $C_1$-$C_6$-alkyl group, Y is a tertiary nitrogen atom or a group

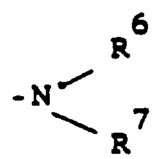

or $>N-R_8$, in which $R^6$, $R^7$ and $R^8$ are $C_1$-$C_{20}$-alkyl or $C_1$-$C_{20}$-alkenyl groups whose carbon chains can be interrupted by hetero-atoms and/or can carry a terminal hydroxyl or primary amino group or an acylamino group or can be a cycloaliphatic ($C_5$-$c_6$) or araliphatic radical or an alkylene-heteroaryl radical, or Y is a saturated or unsaturated heterocyclic radical in which at least one tertiary nitrogen atom is included in the meanings mentioned for Y, and x is an integer from 1 to 6, which comprises

a) adding the basic additives of the formula (I) mentioned to the water-moist presscake of the organic pigment mentioned and incorporating them before drying, or

b) mixing the milled basic additives of the formula (I) mentioned with the powder of the organic pigments, or

c) adding the basic additives of the formula (I) mentioned, before, during or after the formation of pigment, or

d) adding the basic additives of the formula (I) mentioned, before, during or after a pigment dispersion process, or

e) subjecting the basic additives of the formula (I) mentioned and the organic pigments to a conjoint revatting finish, or

f) adding the basic additives of the formula (I) mentioned during the dry milling of the organic pigments with or without additional milling aids on a rolling or vibrating mill or during a wet milling of the organic pigments in agueous, aqueous-organic or organic milling medium, or

g) adding the basic additives of the formula (I) mentioned, before, during or after a finishing operation of the organic pigments in aqueous, aqueous-organic or organic medium at atmospheric pressure or under elevated pressure.

2. The process as claimed in claim 1, wherein in the radical Q of the formula II mentioned there m is 0 or 1 and n is 0, A is the divalent group $-(CH_2)_{2-4}-$, Y is a dialkyl($C_1$-$C_6$)-amino group whose alkyl groups can carry terminal hydroxyl or primary amino groups or acylamino groups or Y is a saturated or unsaturated heterocyclic radical which contains at least one tertiary nitrogen atom and x is an integer from 1 to 3.

3. The process as claimed in claim 1, wherein in the radical Q of the formula II mentioned there m and n are zero, A is the divalent group $-(CH_2)_{2-3}-$, Y is the dimethylamino or diethylamino group or an imidazole or piperazine radical and x is the number 1 or 2.

4. A pigment preparation as claimed in claim 1, wherein in the radical Q of the formula II mentioned there m and n are zero, A is the divalent group $-(CH_2)_{2-3}-$, Y is the radical

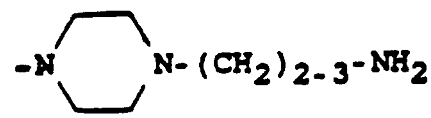

or the radical

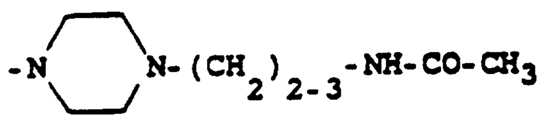

and x is 1.

5. The process as claimed in claim 1, wherein in the radical Q of the formula II mentioned there m and n are zero, A is the divalent group $-(CH_2)_{2-3}-$, Y is the divalent radical

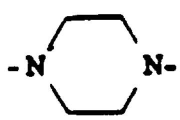

and x is 2.

6. The process as claimed in at least one of claims 1 to 5, wherein the organic pigments are azo pigments or polycyclic pigments.

7. The process as claimed in at least one of claims 1 to 6, wherein the organic pigments are polycyclic pigments of the anthraquinone, anthrapyrimidine, anthanthrone, quinacridone, quinophthalone, diketopyrrolopyrrole, dioxazine, flavanthrone, indanthrone, isoindoline, isoindolinone, isoviolanthrone, perinone, perylene, phthalocyanine, pyranthrone or thioindigo series.

8. The process as claimed in at least one of claims 1 to 5, wherein the organic pigments are present as pure pigments or in the form of physical mixtures or as mixed crystals of two or more pigments.

9. The process as claimed in at least one of claims 1 to 5, wherein the organic pigments are from the series of perinone or anthanthrone pigments.

10. The process as claimed in at least one of claims 1 to 5, wherein the organic pigment is a cis- and/or trans-naphthoylenebisbenzimidazole or 4,10-dibromoanthanthrone.

**11.** The process as claimed in at least one of claims 1 to 10, which comprises employing the organic pigments and the basic additives in quantitative proportions such that the resulting pigment preparation consists of 99.9 to 85 % by weight of organic pigments and 0.1 to 15 % by weight of at least one basic additive of the formula I mentioned in claim 1.

**12.** The process as claimed in at least one of claims 1 to 10, which comprises employing the organic pigments and the basic additives in quantitative proportions such that the resulting pigment preparation consists of 99 to 92 % by weight of organic pigments and 1 to 8 % by weight of at least one basic additive of the formula I mentioned in claim 1.

**13.** A method for the pigmenting of high-molecular-weight organic materials, which comprises pigmenting with a pigment preparation obtainable as claimed in claims 1 to 12.

**14.** A method for the pigmenting of lacquer systems, which comprises pigmenting with a pigment preparation obtainable as claimed in claims 1 to 12.

**Revendications**

**Revendications pour les Etats contractants suivants : AT, BE, CH, DE, DK, FR, GB, GR, IT, LI, LU, NL, SE**

**1.** Préparations pigmentaires à partir de pigments organiques et d'adjuvants basiques de formule générale I

$(Q - A)_xY$ (I)

dans laquelle Q représente un radical de formule générale II

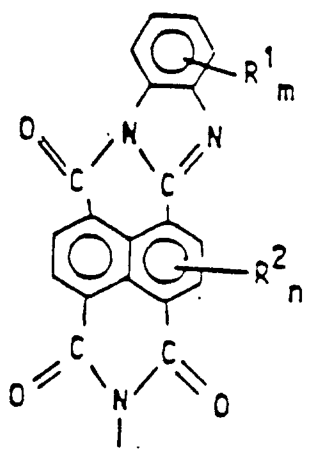

(II)

dans laquelle $R^1$ signifie un atome d'halogène, un groupe alkyle en ($C_1$-$C_4$), alcoxy en ($C_1$-$C_4$) ou cyano, dans le cas de m>1 $R^1$ peut alors avoir en combinaison lesdites significations , $R^2$ représente un atome d'halogène, m et n signifient des nombres entiers de 0 à 4, A représente une liaison chimique ou un groupe bivalent de la série $-(CH_2)_p-$,$-CR^3R^4-$, arylène, -S-, -O- et $-NR^5-$ ou une combinaison chimiquement significative de ces groupes bivalents, p étant un nombre entier de 1 à 12, $R^3$ signifie un atome d'hydrogène ou un groupe alkyle en ($C_1$-$C_6$), $R^4$ un groupe alkyle en ($C_1$-$C_6$), et $R^5$ un atome d'hydrogène ou un groupe alkyle en ($C_1$-$C_6$), Y un atome d'azote tertiaire ou un groupe

$R^6$

$-N$ ou

$R^7$

$N-R^8$, dans lesquels $R^6$, $R^7$ et $R^8$ signifient des groupes alkyle en ($C_1$-$C_{20}$) ou alcényle en ($C_1$-$C_{20}$),

dont les chaînes carbonées peuvent être interrompues par des hétéroatomes et/ou porter un groupe terminal hydroxyle, amino primaire a acylamino, ou peuvent signifier un radical cycloaliphatique en ($C_5$-$C_6$) ou araliphatique ou un radical -alkylène-hétéroaryle, ou Y représente un radical hétérocyclique saturé ou insaturé, au moins un atome d'azote tertiaire étant contenu dans lesdites significations pour Y et x signifie un nombre entier de 1 à 6.

**2.** Préparations pigmentaires selon la revendication 1, caractérisées en ce que dans le radical Q de ladite formule générale II citée, m est 0 ou 1 et n est 0, A signifie le groupe bivalent $-(CH_2)_{2-4}-$, Y un groupe dialkyle en ($C_1$-$C_6$)-amino, dont les groupes alkyle peuvent porter des groupes terminaux hydroxyle, amino primaires ou acylamino, ou Y représente un radical hétérocyclique saturé ou insaturé, qui contient au moins un atome d'azote tertiaire et x signifie un nombre entier de 1 à 3.

**3.** Préparations pigmentaires selon la revendication 1, caractérisées en ce que dans le radical Q de ladite formule générale II citée m et n sont zéro, A signifie un groupe bivalent $-(CH_2)_{2-3}-$, Y le groupe diméthylamino ou diéthylamino ou un radical d'imidazole ou de pipérazine et x le nombre 1 ou 2.

**4.** Préparations pigmentaires selon la revendication 1, caractérisées en ce que dans le radical Q de ladite formule générale II citée m et n sont zéro, A signifie le groupe bivalent $-(CH_2)_{2-3}-$, Y représente le radical

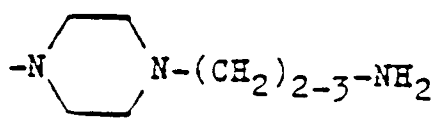

ou le radical

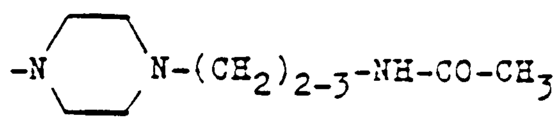

et x = 1

**5.** Préparations pigmentaires selon la revendication 1, caractérisées en ce que dans le radical Q de ladite formule générale II citée m et n sont zéro, A signifie le groupe bivalent $-(CH_2)_{2-3}-$, Y représente le radical bivalent

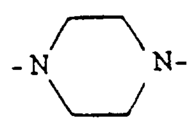

et x = 2.

**6.** Préparations pigmentaires selon au moins l'une des revendications 1 à 3, caractérisées en ce que ces mélanges contiennent les adjuvants basiques contenus dans les préparations pigmentaires selon la revendication 4 et 5.

**7.** Préparations pigmentaires selon au moins l'une des revendications 1 à 6, caractérisées en ce que les pigments qu'elles contiennent sont des pigments azoïques ou polycycliques.

**8.** Préparations pigmentaires selon au moins l'une des revendications 1 à 6, caractérisées en ce que les pigments qu'elles contiennent sont des pigments polycycliques de la série d'anthraquinone, d'anthrapyrimidine, d'anthanthrone, de quinacridone, de quinophtalone, de dicétopyrrolopyrrole, de dioxazine, de flavanthrone, d'indanthrone, d'isoindoline, d'isoindolinone, d'isoviolanthrone, de périnone, de pérylène, de phtalocyanine, de pyranthrone ou de thioindigo.

**9.** Préparations pigmentaires selon au moins l'une des revendications 1 à 6, caractérisées en ce que les pigments qu'elles contiennent sont présents en tant que pigments purs ou sous forme de mélanges physiques ou en tant que solutions solides (cristaux mixtes) de deux ou plusieurs pigments.

**10.** Préparations pigmentaires selon au moins l'une des revendications 1 à 6, caractérisées en ce que les pigments qu'elles contiennent proviennent de la série des pigments de périnone ou d'anthanthrone.

**11.** Préparations pigmentaires selon au moins l'une des revendications 1 à 6, caractérisées en ce que le pigment qu'elles contiennent est un cis- et/ou trans-naphtoylène-bis-benzimidazole ou le 4,10-dibromoanthanthrone.

**12.** Préparations pigmentaires selon au moins l'une des revendications 1 à 11, caractérisées en ce que les préparations se composent de 99,9 à 85% en poids de pigments organiques et de 0,1 à 15% en poids d'au moins un adjuvant basique de formule générale I mentionnée à la revendication 1.

**13.** Préparations pigmentaires selon au moins l'une des revendications 1 à 11, caractérisées en ce que les préparations se composent de 99 à 92% en poids de pigments organiques et de 1 à 8% en poids d'au moins un adjuvant basique de formule générale I mentionnée à la revendication 1.

**14.** Utilisation des préparations pigmentaires selon au moins l'une des revendications 1 à 13 pour la pigmentation de matières organiques de haut poids moléculaire.

**15.** Utilisation des préparations pigmentaires selon au moins l'une des revendications 1 à 13 pour la pigmentation des systèmes de laques et vernis.

**Revendications pour l'Etat contractant suivant : ES**

**1.** Procédé pour la préparation de préparations pigmentaires à partir de pigments organiques et d'adjuvants basiques de formule générale I

$(Q - A)_xY$ (I)

dans laquelle Q représente un radical de formule générale II

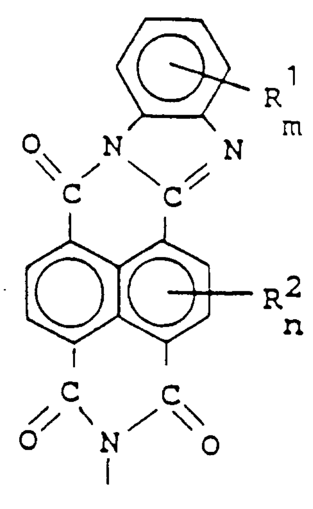

(II)

dans laquelle $R^1$ signifie un atome d'halogène, un groupe alkyle en ($C_1$-$C_4$), alcoxy en ($C_1$-$C_4$) ou cyano, dans le cas de m>1 $R^1$ peut alors avoir en combinaison lesdites significations, $R^2$ représente un atome d'halogène, m et n signifient des nombres entiers de 0 à 4, A représente une liaison chimique ou un groupe bivalent de la série $-(CH_2)_p-$,$-CR^3R^4-$, arylène, -S-, -O- et $-NR^5-$ ou une combinaison chimiquement significative de ces groupes bivalents, p étant un nombre entier de 1 à 12, $R^3$ signifie un atome d'hydrogène ou un groupe alkyle en ($C_1$-$C_6$), $R^4$ un groupe alkyle en ($C_1$-$C_6$), et $R^5$ un atome d'hydrogène ou un groupe alkyle en ($C_1$-$C_6$), Y un atome d'azote tertiaire ou un groupe

$R^6$

$-N$ ou

$R^7$

N-$R^8$, dans lesquels $R^6$, $R^7$ et $R^8$ signifient des groupes alkyle en ($C_1$-$C_{20}$) ou alcényle en ($C_1$-$c_{20}$), dont les chaînes carbonées peuvent être interrompues par des hétéroatomes et/ou porter un groupe terminal hydroxyle amino primaire ou acylamino, ou peuvent signifier un radical cycloaliphatique en ($C_5$-$C_6$) ou araliphatique ou un radical -alkylène-hétéroaryle, ou Y représente un radical hétérocyclique saturé ou insaturé, au moins un atome d'azote tertiaire étant contenu dans les significations mentionnées pour Y et x signifie un nombre entier de 1 à 6, caractérisé en ce que

a) on additionne et on incorpore les adjuvants basiques de ladite formule I au gâteau de filtration humide du pigment organique mentionné, avant le séchage, ou

b) on mélange les adjuvants basiques broyés de ladite formule I avec la poudre des pigments organiques, ou

c) on ajoute les adjuvants basiques de ladite formule I avant, pendant ou après la formation du pigment, ou

d) on ajoute les adjuvants basiques de ladite formule I avant, pendant ou après un procédé avec division du pigment, ou

e) on traite les adjuvants basiques de ladite formule I et les pigments organiques par une finition commune à la cuve, ou

f) on ajoute les adjuvants basiques de ladite formule I dans le cadre d'un broyage à sec des pigments organiques avec ou sans adjuvants de broyage supplémentaires dans un broyeur à cylindres ou broyeur vibrant ou dans le cadre d'un broyage humide des pigments organiques dans un milieu de broyage aqueux, aqueux-organique ou organique, ou

g) on ajoute les substances basiques de ladite formule I avant, pendant ou après une finition des pigments organiques en milieu aqueux, aqueux-organique ou organique à une pression normale ou sous pression élevée.

2. Procédé selon la revendication 1, caractérisé en ce que dans le radical Q de ladite formule générale II citée, m est = 0 ou 1 et n est = 0, A signifie le groupe bivalent $-(CH_2)_{2-4}-$, Y un groupe dialkyle en ($C_1$-$C_6$)-amino, dont les groupes alkyle peuvent porter des groupes terminaux hydroxyle, amino primaires ou acylamino, ou Y représente un radical hétérocyclique saturé ou insaturé, qui contient au moins un atome d'azote tertiaire et x signifie un nombre entier de 1 à 3.

3. Procédé selon la revendication 1, caractérisé en ce que dans le radical Q de ladite formule générale II citée m et n sont zéro, A signifie un groupe bivalent $-(CH_2)_{2-3}-$, Y le groupe diméthylamino ou diéthylamino ou un radical d'imidazole ou de pipérazine et x le nombre 1 ou 2.

4. Procédé selon la revendication 1, caractérisé en ce que dans le radical Q de ladite formule générale II citée, m et n sont zéro, A signifie le groupe bivalent $-(CH_2)_{2-3}-$, Y représente le radical

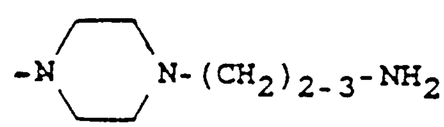

ou le radical

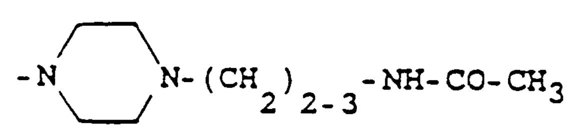

et x est = 1.

5. Procédé selon la revendication 1, caractérisé en ce que dans le radical Q de ladite formule générale II citée, m et n sont zéro, A signifie le groupe bivalent $-(CH_2)_{2-3}$, Y représente le radical bivalent

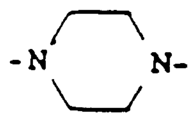

et x = 2.

6. Procédé selon au moins l'une des revendications 1 à 5, caractérisé en ce que les pigments organiques sont des pigments azoïques ou polycycliques.

7. Procédé selon au moins l'une des revendications 1 à 6, caractérisé en ce que les pigments organiques sont des pigments polycycliques de la série d'anthraquinone, d'anthrapyrimidine, d'anthanthrone, de quinacridone, de quinophtalone, de dicétopyrrolopyrrole, de dioxazine, de flavanthrone, d'indanthrone, d'isoindoline, d'isoindolinone, d'isoviolanthrone, de périnone, de pérylène, de phtalocyanine, de pyranthrone ou de thioindigo.

8. Procédé selon au moins l'une des revendications 1 à 5, caractérisé en ce que les pigments organiques sont présents en tant que pigments purs ou sous forme de mélanges physiques ou comme solutions solides (cristaux mixtes) de deux ou plusieurs pigments.

9. Procédé selon au moins l'une des revendications 1 à 5, caractérisé en ce que les pigments organiques proviennent de la série des pigments du périnone ou de l'anthanthrone.

10. Procédé selon au moins l'une des revendications 1 à 5, caractérisé que ce que le pigment organique est un cis-et/ou trans-napthoylène-bis-benzimidazole ou le 4,10-dibromoanthanthrone.

11. Procédé selon au moins l'une des revendications 1 à 10, caractérisé en ce qu'on utilise les pigments organiques et les adjuvants basiques dans des rapports quantitatifs tels que les préparations pigmentaires obtenues contiennent de 99,9 à 85% en poids de pigments organiques et de 0,1 à 15% en poids d'au moins un adjuvant basique de ladite formule générale I citée dans la revendication 1.

12. Procédé selon au moins l'une des revendications 1 à 10, caractérisé en ce qu'on utilise les pigments organiques et les adjuvants basiques dans des rapports quantitatifs tels que les compositions pigmentaires obtenues aient une teneur d'au moins 99 à 92 % en poids en pigments organiques et de 1 à 8 % en poids en au moins un adjuvant basique de ladite formule générale I citée à la revendication 1.

13. Procédé pour la pigmentation de matières organiques de haut poids moléculaire caractérisé en ce qu'on utilise pour la pigmentation les préparations pigmentaires que l'on peut obtenir selon les revendications 1 à 12.

14. Procédé pour la pigmentation de systèmes de laques et vernis caractérisé en ce qu'on utilise pour la pigmentation les préparations pigmentaires que l'on peut obtenir selon les revendications 1 à 12.